(19) **Europäisches Patentamt / European Patent Office / Office européen des brevets**

(11) **EP 2 954 969 B1**

(12) # EUROPEAN PATENT SPECIFICATION

(45) Date of publication and mention
of the grant of the patent:
**10.01.2018 Bulletin 2018/02**

(51) Int Cl.:
*B23K 9/173* *(2006.01)*  *B23K 9/00* *(2006.01)*
*B23K 9/025* *(2006.01)*  *B23K 9/028* *(2006.01)*
*B23K 9/095* *(2006.01)*  *B23K 9/02* *(2006.01)*

(21) Application number: **13874504.7**

(22) Date of filing: **01.03.2013**

(86) International application number:
**PCT/JP2013/055719**

(87) International publication number:
**WO 2014/122789 (14.08.2014 Gazette 2014/33)**

(54) **MULTI-ELECTRODE ELECTROGAS ARC WELDING METHOD FOR THICK STEEL PLATES AND MULTI-ELECTRODE ELECTROGAS ARC CIRCUMFERENTIAL WELDING METHOD FOR STEEL PIPES**

MULTIELEKTRODEN-ELEKTROGAS-LICHTBOGENSCHWEISSVERFAHREN FÜR DICKE STAHLPLATTEN UND MULTIELEKTRODEN-ELEKTROGAS-LICHTBOGENRUNDSCHWEISSVERFAHREN FÜR STAHLROHRE

PROCÉDÉ DE SOUDAGE À L'ARC ÉLECTROGAZ MULTI-ÉLECTRODE POUR DES PLAQUES D'ACIER ÉPAISSES ET PROCÉDÉ DE SOUDAGE CIRCONFÉRENTIEL À L'ARC ÉLECTROGAZ MULTI-ÉLECTRODE POUR DES TUYAUX EN ACIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2013 JP 2013021741**

(43) Date of publication of application:
**16.12.2015 Bulletin 2015/51**

(73) Proprietor: **Nippon Steel & Sumitomo Metal Corporation**
**Tokyo 100-8071 (JP)**

(72) Inventors:
• **HASHIBA, Yuuji**
**Tokyo 100-8071 (JP)**

• **NOSE, Tetsuro**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
JP-A- H0 857 641      JP-A- S5 391 041
JP-A- S5 680 392      JP-A- H01 289 568
JP-A- H08 187 579     JP-A- H10 118 770
JP-A- S53 144 442     JP-A- S55 149 781
JP-A- S62 101 380     JP-A- 2005 074 442
JP-A- 2012 011 407

## Description

Technical Field

The present invention relates to a multi-electrode electrogas arc welding method for thick steel plates. In particular, the invention relates to a multi-electrode electrogas arc welding method for thick steel plates and a multi-electrode electrogas arc circumferential welding method for steel pipes that, in producing and constructing a large steel structure by using thick steel plates with a plate thickness of about 40 to 300 mm, can achieve both welding efficiency improvement and weld defect reduction by highly productive single-pass electrogas arc welding when performing butt welding between the steel plates, circumferential welding between ends of steel pipes butted to each other, or butt welding of a seam portion between the steel pipes in a vertical position.

Background Art

In recent years, along with an increase in the size of structures, plate thickness of simple steel plates or steel pipes used as columnar members have also been increased. For example, more steel pipes are being manufactured by bend processing steel plates having a plate thickness of more than 100 mm into cylindrical shapes and then seam welding butted portions of the cylindrical products. Additionally, regarding steel columnar members used in the architectural field, in addition to conventionally used columnar members having angular cross-sections, such as box columns, there have recently been increased use of steel pipes having round cross-sections, as columnar members, from the viewpoint of designability. Furthermore, there are increasing applications of steel pipes as well as steel plates as large steel structures, such as steel pipe-shaped members used for large steel towers and large windmills for power generation.

Currently, a steel pipe column as a structure is manufactured mainly by circumferentially welding ends of a plurality of steel pipes each shorter than an entire length of a final structure to connect the steel pipes together. In addition, a typical method for connecting the steel pipes is, for example, a method using multi-pass or multi-layer welding by carbon dioxide gas arc welding, submerged arc welding at a relatively low heat input, or the like. Meanwhile, when steel pipes have a plate thickness exceeding 50 mm, multi-layer welding at low heat input as mentioned above requires enormous work time and work cost. Accordingly, there is an increasing desire to improve welding efficiency (welding speed) to shorten welding work time, i.e. reduce work cost. In addition, efficiency improvement is similarly desired when manufacturing a structure composed of thick steel plates. In constructing a large welded structure by welding, such as seam welding of plate joints or steel pipes composed of thick steel plates or circumferential welding of ends of steel pipes, application of single pass welding at high heat input using, for example, electrogas arc welding (EGW welding) or the like is expected instead of conventional multi-pass or multi-layer welding.

The above-described EGW welding is known as a highly efficient single pass welding method typically performed in a vertical position, and particularly suitably used in the field of ship construction. In a typical manner for the EGW welding, for example, groove processing is performed at respective ends of steel plates to be welded. While butting faces of the groove to each other, the steel plates to be welded are disposed so that a weld line is substantially in a vertical direction. Then, a welding torch is moved upward vertically in a direction from lower ends to upper ends of the steel plates to be welded, thereby proceeding welding. In addition, the welding torch (welding electrode) used here is usually integrated with an automatic carriage, and typically, there is provided a mechanism that detects a speed at which a weld metal is formed in the groove (a rising rate of a molten metal surface level) to allow the carriage to automatically run upward vertically in synchronization with the speed.

Additionally, in recent years, there has been proposed a method for manufacturing a steel pipe member for an architectural steel frame column by EGW welding as described above. Patent Literature 1 and 2 each disclose a method for bonding each of a non-penetrating type diaphragm plate and a penetrating type diaphragm to an end face of a steel pipe member or a circumferential part of a casing by EGW welding. The technique disclosed in each of Patent Literature 1 and 2 is not a method for performing circumferential welding of steel pipes but a circumferential welding method for externally fitting the diaphragm plate (steel plate) member as a joint member into the circumferential part of the steel pipe member and welding/bonding the diaphragm plate member to the circumferential part of the steel pipe. Furthermore, Patent Literature 2 describes, in addition to the structure described in Patent Literature 1, stabilization of a molten pool fluid level by specifying a current monitoring method during welding.

In addition, for example, Patent Literature 3 and the like each disclose a device for circumferentially welding a steel pipe member and a flange-shaped member such as a steel frame joint provided on an outer circumferential surface of the steel pipe member by EGW welding. Particularly, the welding device described in Patent Literature 3 is provided with a plurality of welding torches (electrodes) corresponding to a number of portions to be welded in order to simultaneously and collectively weld a plurality of flange-shaped members to be attached to a single steel pipe column (a workpiece). The use of the multiple electrodes here means a structure in which a single welding device is provided with the number of electrodes corresponding to the number of portions to be welded and does not mean that a plurality of electrodes are provided in a single groove.

As for the EGW welding method, a two-electrode type EGW welding device has been proposed that uses a plurality of welding torches (electrodes) for one portion to be welded (for example, Patent Literature 4), and is particularly used for construction of a container ship requiring welding of thick steel plates. Unlike conventional EGW welding devices configured to use only one electrode for one portion to be welded, the welding device described in Patent Literature 4 is configured to apply two electrodes to one portion to be welded. Then, the device achieves two-electrode welding while overcoming a mutual arc interference problem occurring when the two torches come too close to each other during the two-electrode welding. In Patent Literature 4, a first benefit obtained by the two-electrode welding is an expansion of an upper limit of a plate thickness that allows welding, and a second benefit obtained thereby is to allow achievement of welding efficiency improvement, i.e., productivity improvement by reduction of welding work time. In EGW welding, in an opening (region) enclosed by groove faces facing each other, arc generated from tips of welding materials (welding wires) fed in the torches serves as a heat source to cause the welding wires themselves and surfaces of the groove faces (base materials) to be uniformly fused together, whereby the space enclosed by the facing groove faces is finally fully filled with a molten weld metal. Then, the molten weld metal is solidified to become a weld metal, as a result of which each base material and the weld metal are integrated with each other to form a weld joint.

Generally, when welding excessively thick base materials, the entire groove faces cannot be uniformly heated by only one electrode, causing an unmelted portion, a so-called incomplete fusion defect to occur in a partial range of the groove faces. In the welding device described in Patent Literature 4, even in the case of a plate thickness that causes an incomplete fusion defect in one-electrode EGW welding, increasing the number of the electrodes to two allows the groove faces to be sufficiently heated and melted, so that the occurrence of an incomplete fusion defect can be suppressed. Thereby, Patent Literature 4 achieves the expansion of the upper limit of a plate thickness allowing welding. In addition, welding efficiency, i.e., an amount (mass) of generation of the weld metal filled in the opening enclosed by the groove faces facing each other, which can be obtained per unit time, is substantially the same between the two electrodes. Thus, by increasing the number of the electrodes to two, the device achieves simply about two-fold welding efficiency as compared to one-electrode EGW welding. In one-electrode EGW welding, there is an upper limit to electric energy that can be applied to the electrode from the viewpoint of maintaining a stable, favorable arc state, i.e., maintaining practical workability by stably generating arc. Thus, it is generally difficult to obtain two-fold deposition efficiency, for example, by increasing a current value or a voltage value by two times to simply input an amount of energy doubled per unit time to the electrode.

In addition, the two-electrode type EGW welding device disclosed in Patent Literature 4 is provided with a mechanism that detects the rising rate of a molten metal surface level by constantly monitoring a welding current value and continues appropriate welding by controlling an ascending speed of a carriage.

In Patent Literature 5 and 6, an ascending speed of torches and/or a feeding speed of welding wires are/is changed so that the welding current value lies in a predetermined range by utilizing that when a tip of each torch (each welding wire) becomes close to a molten metal surface level, the welding current value increases, whereas when the tip of each torch becomes away from the molten metal surface level, the welding current value decreases.

In Patent Literature 7, a distance between a molten metal surface level and the tip of a torch (a welding wire) is detected from a welding current and a previously obtained coefficient to correct a difference to a set distance, thereby adjusting a position of the torch.. JP-A-08187579 discloses a multi-electrode electrogas arc welding method for thick steel plates.

Citation List

[Patent Literature]

[Patent Literature 1] Japanese Laid-open Patent Publication No. H11-33716
[Patent Literature 2] Japanese Laid-open Patent Publication No. 2005-74442
[Patent Literature 3] Japanese Laid-open Patent Publication No. 2003-245775
[Patent Literature 4] Japanese Laid-open Patent Publication No. H10-118771
[Patent Literature 5] Japanese Laid-open Patent Publication No. 2012-11400
[Patent Literature 6] Japanese Laid-open Patent Publication No. 2012-11407
[Patent Literature 7] Japanese Laid-open Patent Publication No. 2007-160349

SUMMARY OF INVENTION

Technical Problems

Recently, due to increased sizes of structures, plate thickness of structural members has also been increased, and there have been cases of application of thick steel plates with a thickness reaching even about 300 mm at maximum. In manufacturing a weld joint for bonding such thick steel plates, applying conventional multi-pass welding at low heat input significantly increases welding work time. Due to this, there has been a strong desire for work cost reduction, i.e., welding efficiency improvement. Accordingly, it is expected that welding work time for structures composed of thick steel plates is reduced by applying single pass welding at high heat input that allows welding of an entire plate thickness of one portion intended to be welded to be completed at one time.

In the conventional method or device described in each above Patent Literature, when applying single pass welding by EGW welding of thick steel plates with a maximum plate thickness reaching even 300 mm, there are problems as described below.

A first method adapted to perform single pass welding on thick steel plates with a plate thickness exceeding 100 mm is to perform single pass welding each one time from each of front and back face sides of members, i.e., two times in total. This method uses, repeatedly twice, a machine for which an upper limit amount of a plate thickness that can be welded per side, i.e., per run is usually limited to about 80 mm, thereby allowing welding for plate thickness substantially up to two-fold. For example, a groove shape, like an X-shaped groove, is adopted as a groove shape weldable from both of the front and back faces of the members. More specifically, after completing single pass welding from the front face side, the steel plates are reversed to execute single pass welding one more time from the back face side. In this method, the two-electrode type EGW welding device can weld a plate thickness of from 80 to 90 mm by only single-sided welding work and can weld a plate thickness up to an maximum amount of from 160 to 180 mm by welding two time for double-sided welding.

However, there is a problem in applying the above method. When performing EGW welding again from the back side on a region where a weld bead according to a front side groove has already been formed, an advanced level of technical skill for welding work is needed to completely remelt a root zone composed of the weld metal previously formed on the front side to obtain full penetration without any undeposited portion. Additionally, in the above method, although each weld metal from both faces forms the root zone near a center of the plate thickness, a slag generated on a root zone side in the second welding is unlikely to smoothly float up to be discharged. Then, due to the slag inclusion, a weld defect can occur near the root zone. Furthermore, primarily, it is not efficient to perform welding work twice, instead of single pass welding, on the entire plate thickness of the members to be welded. In addition to that, there is added the step of reversing a joint that is typically a huge heavy object. Thus, the method can be said to be a more inefficient welding method. Moreover, although depending on properties of a weld material to be applied, there is concern with regard to toughness reduction, since the previously deposited weld metal is heat-affected by the subsequent (second welding) pass.

Additionally, as a second method adapted to perform single pass welding of thick steel plates, there is often adopted a method in which low input heat multiple pass (multi-layer) welding is performed on a region other than a plate thickness region weldable by single pass. In this case, a groove with an adoptable shape can be, for example, either a V-shaped groove used for single-sided welding or an X-shaped groove used for double-sided welding. However, there are two procedures that can be taken: whether to first perform low input heat welding and then perform high input heat single-pass welding on a remaining plate thickness region or, conversely, first perform high input heat single-pass welding, followed by low input heat welding on the remaining plate thickness region to finish filling the groove. The above-described adapted method ensures reduction in work time, except for a setup time for changing welding equipment, as compared to when applying low input heat welding to the entire plate thickness region.

On the other hand, a point to keep in mind when adopting the above method is that, depending on specifications of mechanical properties required for the joint, special consideration is needed for selecting materials to be welded. For example, when first performing low input heat welding and then performing high input heat single-pass welding on the remaining plate thickness region, reheat due to the high input heat welding is subsequently applied to a weld metal formed by the low input heat welding, thereby causing the weld metal formed by the low input heat welding to be excessively softened. Thus, a possibility of causing a partial strength reduction needs to be considered. In addition, conversely, when first performing high input heat single-pass welding and then performing low input heat welding on the remaining plate thickness region, reheat due to the low input heat welding is subsequently applied to a weld metal formed by the high input heat welding whose hardenability is usually set to a relatively high level, thereby causing the weld metal formed by the high input heat welding to be excessively hardened. Thus, consideration is needed for a possibility of causing toughness reduction of the weld metal in the region as result of the excessive hardening.

Conventionally, in performing butt welding of thick steel plates having a plate thickness exceeding 100 mm, it has often been inevitable to adopt a method, such as performing multi-pass (multi-layer) welding by taking extremely large amount of time and labor or performing single pass welding twice, each one time on each of the front and the back face sides of thick steel plates, while being accompanied by a step of reversing the huge workpieces. This has caused significant reduction in work efficiency. Accordingly, there has been a strong desire for a method that allows both welding efficiency improvement and weld defect suppression to be achieved by applying single pass welding with high welding efficiency, for example, EGW welding, to a zone to be seam welded of thick steel plates or a steel pipe member composed of a thick steel plate, or the like.

The present invention has been accomplished in view of the above problem, and it is an object of the present invention to provide a multi-electrode electrogas arc welding method for thick steel plates and a multi-electrode electrogas arc circumferential welding method for steel pipes that, in producing and constructing a large steel structure, particularly, using thick steel plates having a plate thickness of about 40 to 300 mm, allow both welding efficiency improvement and weld defect reduction to be achieved when performing butt welding of steel plates or a seam part between steel pipes in a vertical position and when performing circumferential welding of steel pipes.

Solution to Problems

In order to solve the above problems, the present inventors repeatedly conducted intensive and extensive studies in attempts to achieve welding efficiency improvement and weld defect reduction by applying a multi-electrode EGW welding method as a method for performing butt welding of ends of element member(s) composed of thick steel plate(s) to weld thick steel plates to each other or weld a seam portion of a steel pipe member. As a result, the inventors found that both welding efficiency improvement and weld defect reduction can be achieved by disposing two electrogas arc welding devices on both of a front face side and a back side face of thick steel plates, setting a total number of welding torches held by the two welding devices to two or more, furthermore, adopting a groove shape and a butt form that allow a weld metal melted during welding to be guided to pass between the front face side and the back face side of the thick steel plates, and moving welding electrodes in synchronization with a molten metal surface level of the molten weld metal in a groove.

The present invention has been accomplished based on the findings described above, and the summary thereof is as follows:

[1] A multi-electrode electrogas arc welding method, including:

disposing ends of thick steel plates to be welded so as to face each other to form a groove between the ends of the steel plates,
a root opening RO of the groove being in a range of from 0 to 16 mm, and where, when the root opening RO is in a range of $0 \leq RO < 1$ mm, a root face RF satisfies a relationship represented by a formula 1 below; when the root opening RO is in a range of $1$ mm $\leq RO < 10$ mm, the root face RF satisfies a relationship represented by a formula 2 below; and when the root opening RO is in a range of $10$ mm $\leq RO \leq 16$ mm, the root face RF satisfies a relationship represented by a formula 3 below:

$$RF \leq 7.8RO + 4.0 \text{ mm} \quad \text{... formula 1}$$

$$RF \leq 4.8RO + 7.0 \text{ mm} \quad \text{... formula 2}$$

$$RF \leq 55 \text{ mm} \quad \text{... formula 3}$$

in the above formulae 1, 2, and 3, RF represents root face and RO represents root opening;
disposing one or two or more electrogas arc welding electrodes in the groove on each of front and back face sides of the steel plates; and
simultaneously performing welding from downward to upward in a vertical direction,
in which a moving speed of each of the electrogas arc welding electrodes is controlled so that the each electrogas arc welding electrode moves in synchronization with a molten metal surface level of a molten weld metal deposited in the groove.

[2] The multi-electrode electrogas arc welding method according to [1], in which the root opening RO is not less than 3 mm and not more than 8 mm, and the root face RF is not more than 8 mm.

[3] The multi-electrode electrogas arc welding method according to [1] or [2], in which an approach angle of the electrogas arc welding electrodes is set to be not less than 0° and not more than 40° when the approach angle thereof in a vertical downward direction is 0°.

[4] The multi-electrode electrogas arc welding method according to any one of [1] to [3], in which the thick steel plates have a plate thickness of 40 to 300 mm.

[5] The multi-electrode electrogas arc welding method to any one of [1] to [4], in which welding is performed while oscillating at least one of the electrogas arc welding electrodes in a plate thickness direction of the thick steel plates.

[6] The multi-electrode electrogas arc welding method to any one of [1] to [5], in which the thick steel plate is subjected to bend processing into steel pipe shape, and then, ends of the thick steel plate disposed so as to face each other by the bending processing are welded.

[7] A multi-electrode electrogas arc circumferential welding method according to any one of [1] to [5], the method including:

disposing ends of a plurality of steel pipes so as to face each other to form the groove between the ends of the steel pipes; mounting the steel pipes on a positioner means so that center axes of the steel pipes are substantially concentric and substantially horizontal; and

next, causing the positioner means to rotate the steel pipes around the center axes to perform the welding.

[8] The multi-electrode electrogas arc circumferential welding method according to [7], further including disposing joint members so as to face each other on a circumferential part of the steel pipes to form the groove, thereby welding the joint members. Advantageous Effects of Invention

According to the multi-electrode electrogas arc welding method for thick steel plates of the present invention, on the whole, as in the above structure,

butting ends of thick steel plates to each other to form a predetermined groove;

providing a root opening RO and a root face RF of the groove so as to satisfy a predetermined relationship;

disposing each one or more electrogas arc welding electrodes on both face sides of the groove; and

performing single pass welding from downward to upward in a vertical direction simultaneously on both face sides of the thick steel plates,

in which each electrogas arc welding electrode moves in synchronization with a molten metal surface level of a molten weld metal generated in the groove. In this manner, even when performing butt welding of thick steel plates having a plate thickness of about 40 to 300 mm in a vertical position, welding efficiency improvement by single pass welding and an effect of suppressing weld defects can simultaneously be obtained.

Accordingly, for example, high productivity and high welding quality can be simultaneously achieved by applying the present invention to a welding process, for example, when manufacturing a large steel structure composed of steel plates and steel pipes, such as a steel pipe-shaped columnar member manufactured from thick steel plates and used in an architectural field, a large steel tower, or a steel tower portion of a large windmill for power generation. Thus, the degree of social contribution made by the present invention is immeasurable.

BRIEF DESCRIPTION OF DRAWINGS

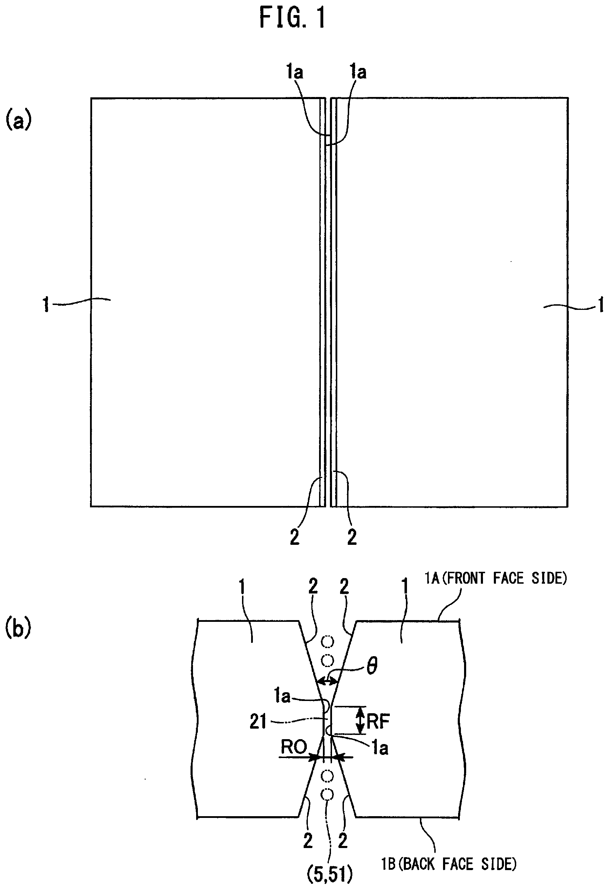

Figures 1 are diagrams for schematically illustrating an embodiment of a multi-electrode electrogas arc welding method for thick steel plates according to the present invention, in which Figure 1A is a plan view depicting a state where ends of thick steel plates subjected to groove processing are butted to each other, and Figure 1B is a top view of Figure 1A.

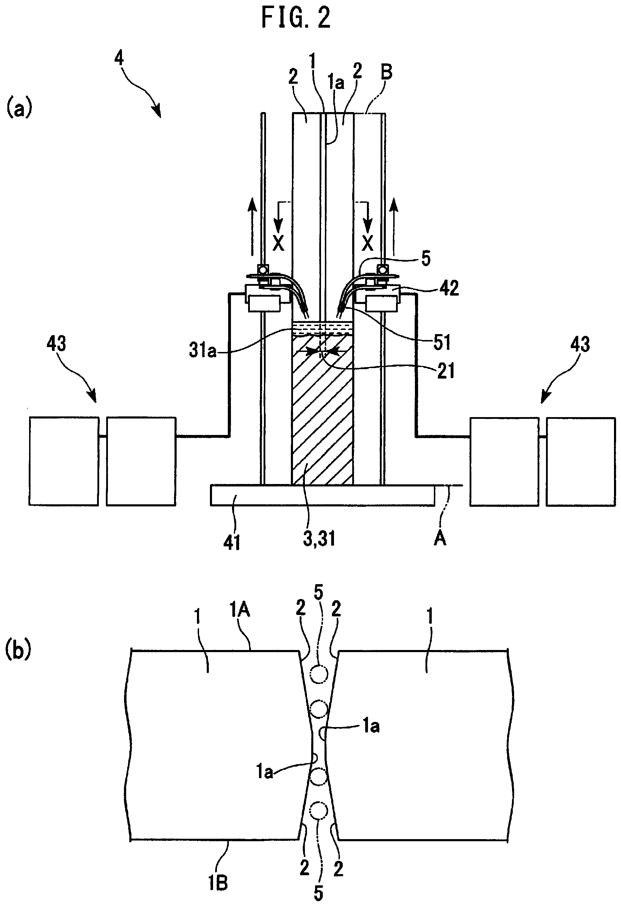

Figures 2 are diagrams for schematically illustrating an embodiment of the multi-electrode electrogas arc welding method for thick steel plates according to the present invention, in which Figure 2A is a schematic diagram depicting steps for performing welding between the ends of thick steel plates using a multi-electrode electrogas arc welding device, and Figure 2B is a cross-sectional view taken along line X-X of Figure 2A.

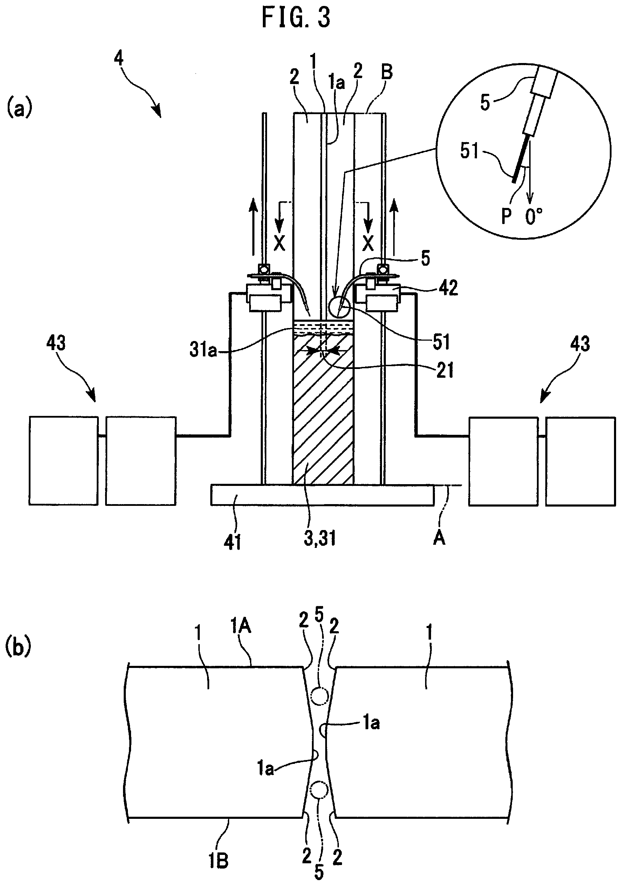

Figures 3 are diagrams similar to Figures 2, where thick steel plates have a relatively thin thickness and each one welding electrode is arranged on a face side of one of the thick steel plates and on a face side of an other one thereof. Figure 3A also illustrates an approach angle of the welding electrodes.

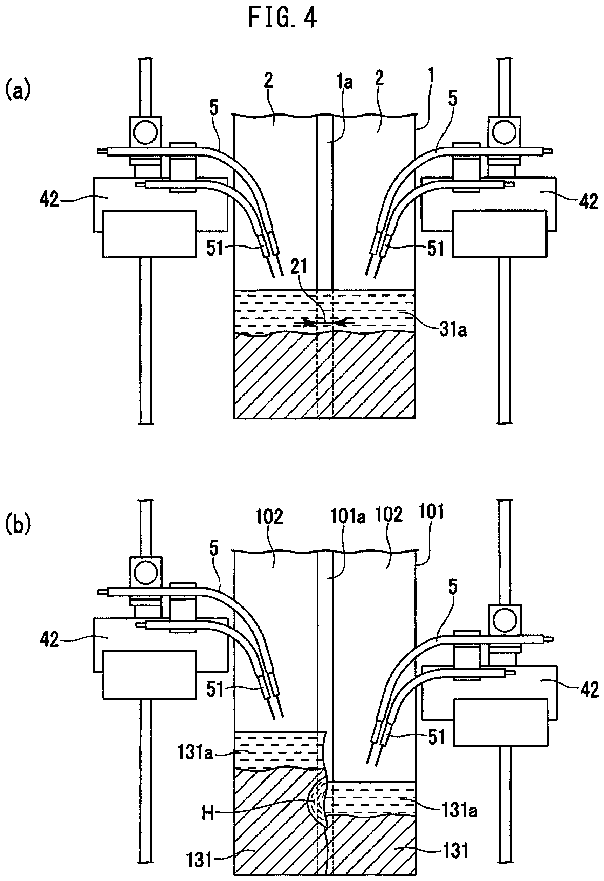

Figures 4 are diagrams for schematically illustrating an embodiment of the multi-electrode electrogas arc welding method for thick steel plates and a multi-electrode electrogas arc circumferential welding method for steel pipes according to the present invention, in which Figure 4A is a schematic diagram depicting a state where a molten metal surface level of a molten weld metal generated in a groove is the same on both face sides of the thick steel plates, and Figure 4B is a schematic diagram depicting a state where the molten metal surface level of the molten weld metal is different on both face sides thereof.

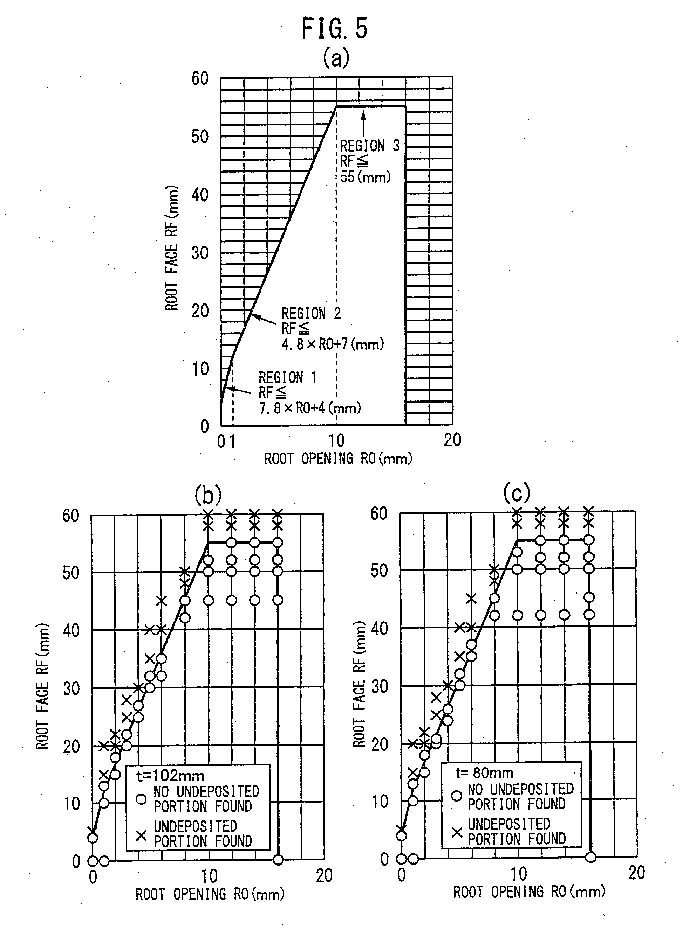

Figures 5 are diagrams for schematically illustrating an embodiment of the multi-electrode electrogas arc welding method for thick steel plates and the multi-electrode electrogas arc circumferential welding method for steel pipes according to the present invention, in which Figure 5A is a graph depicting a relationship between root opening and root face when ends of thick steel plates were disposed facing each other and a groove was formed between the ends thereof; Figure 5B is a graph obtained by plotting a presence or absence of any undeposited portion when a plate thickness t was 102 mm; and Figure 5C is a graph obtained by plotting the presence or absence of any undeposited portion when the plate thickness t was 80 mm.

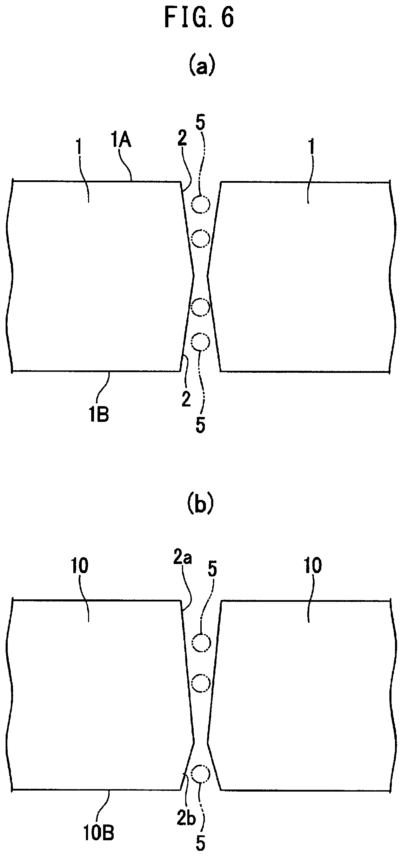

Figures 6 are diagrams for schematically illustrating an embodiment of the multi-electrode electrogas arc welding method for thick steel plates and the multi-electrode electrogas arc circumferential welding method for steel pipes according to the present invention, which are schematic diagrams depicting arrangements of the electrogas arc welding electrodes when a groove shape at the ends of the thick steel plates is changed.

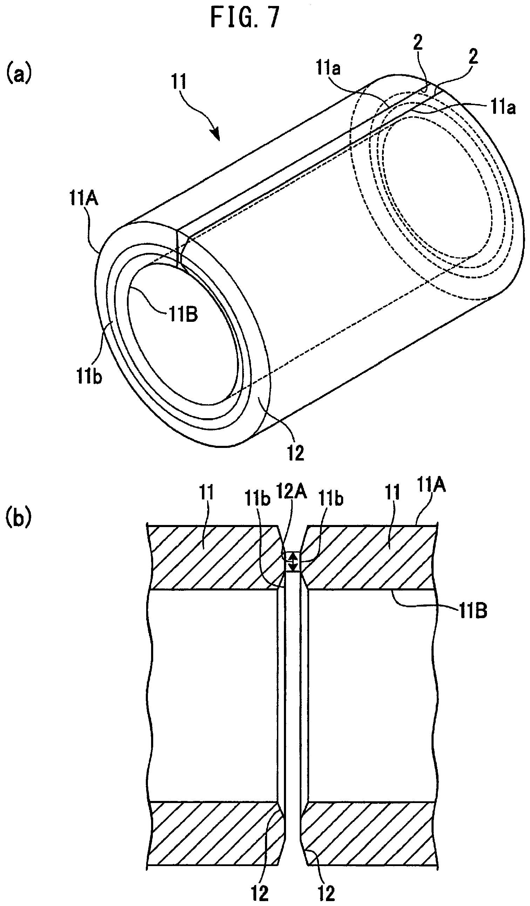

Figures 7 are diagrams for schematically illustrating an embodiment of the multi-electrode electrogas arc welding method for thick steel plates and the multi-electrode electrogas arc circumferential welding method for steel pipes according to the present invention, in which Figure 7A is a perspective view depicting thick steel plates processed into a steel pipe shape; and Figure 7B is a cross sectional view depicting a state where ends of the steel pipes as depicted in Figure 7A have been disposed facing each other and a groove has been formed between the ends thereof.

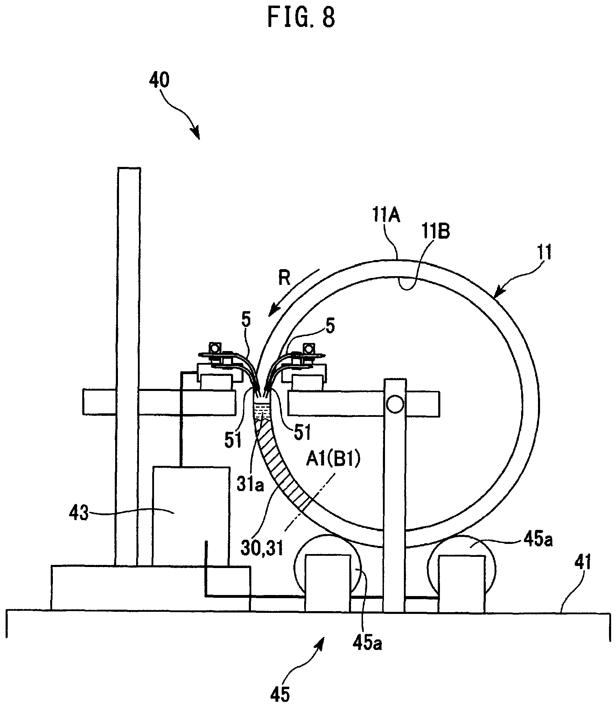

Figure 8 is a diagram for schematically illustrating an embodiment of the multi-electrode electrogas arc circumferential welding method for steel pipes according to the present invention, which is a schematic diagram depicting steps of disposing ends of steel pipes in such a manner as to face each other, forming a groove between the ends thereof, and welding using a multi-electrode electrogas arc welding device.

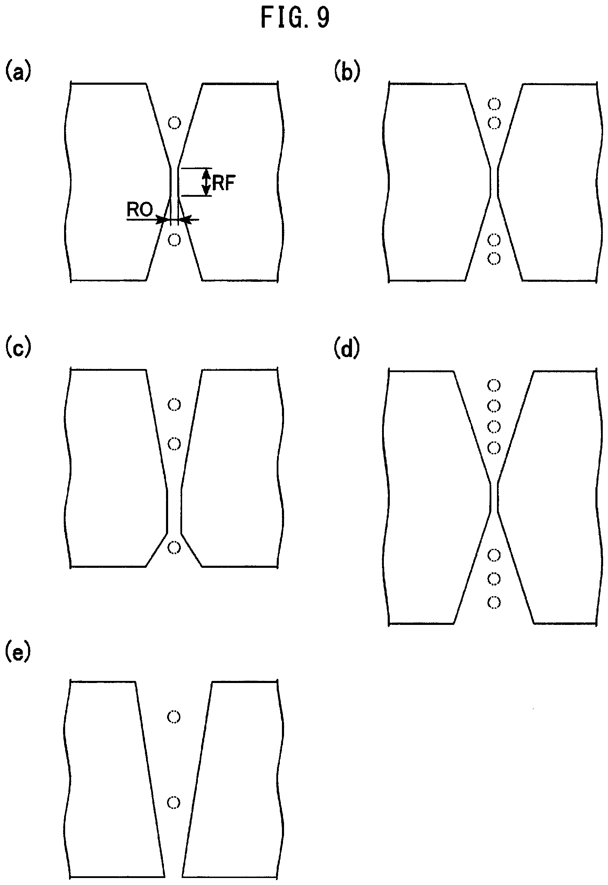

Figures 9 are diagrams for schematically illustrating Examples of the multi-electrode electrogas arc welding method for thick steel plates and the multi-electrode electrogas arc circumferential welding method for steel pipes according to the present invention, which are schematic diagrams depicting positional relationships between groove shapes at the ends of thick steel plates and electrogas arc welding electrodes.

## DESCRIPTION OF EMBODIMENTS

Hereinafter, a description will be given of an embodiment of a multi-electrode electrogas arc welding method for thick steel plates according to the present invention by referring to Figures 1 to 9 as needed. The present embodiment will be illustrated in detail in order to facilitate better understanding of an intention of the multi-electrode electrogas arc welding method for thick steel plates according to the present invention. Thus the present invention is not limited thereto unless otherwise specified.

As described above, the present inventors repeatedly conducted intensive and extensive studies to attempt to improve welding efficiency and reduce weld defects by applying a multi-electrode electrogas arc welding (EGW) method, particularly, as a method for butt welding ends of element members made of thick steel plates to each other to weld the thick steel plates, ends of steel pipes, or a seam portion of the steel pipes.

Recent years have seen a tendency to apply, as steel plates, thick steel plates having a plate thickness exceeding 100 mm and even reaching 300 mm. Due to the tendency, conventional multi-pass multi-layer welding using low input heat has a problem with extremely low welding efficiency. In addition, for example, even when using two electrode-type EGW welding methods using high input heat, it is difficult to perform single pass welding of an entire member plate thickness due to a lack of capability of a welding device.

The present inventors repeated intensive and extensive experiments and, first, considered a countermeasure that increases electrodes, as a method for solving the above problems. In applying the conventionally known two electrode-type EGW welding method mentioned as a typical example of a high heat input welding method, as described above, there occurs no defect such as incomplete fusion, and an upper limit of a plate thickness that allows welding at one time is about 80 to 90 mm. Additionally, in this case, a maximum plate thickness that allows contribution per electrode to sound welding work can be estimated to be about 40 to 45 mm when a simple average obtained by dividing the plate thickness by the number of the electrodes is adopted. For example, in order to apply single pass welding to a joint with a plate thickness of 300 mm, an EGW welding device provided with about 7 to 8 electrodes would be able to perform single pass welding for an amount of the entire thickness. However, performing the above-mentioned multi-electrode welding in the range of the conventional method adopting a groove shape that allows welding from only one face, such as a V-shaped groove, largely increases a groove cross-sectional area formed by the V-shaped groove, i.e., an area of a region enclosed by groove faces facing each other. In this case, a heat input in single pass welding increases proportionally to the groove cross-sectional area. As a result, the amount of applied input heat significantly increases, which substantially reduces strength and toughness of a heat-affected zone (HAZ) of the steel materials and of a weld metal portion. Thus, the above-mentioned conventional multi-electrode welding is practically not applicable.

Adopting, as a groove shape, an X shape, H shape, I shape, or K shape in order to suppress increase in the heat input seems to allow the groove cross-sectional area to be reduced as compared to a groove shape of a simple single V-shaped groove. An X-shaped, H-shaped, I-shaped, or K-shaped groove is typically used for welding from both faces of members, and each shape thereof represents a groove shape in which a groove shape of one face side of members corresponds to, substantially, each of a V shape (or Y shape), U shape, I shape, and single bevel shape and the groove shapes of both faces thereof are the same.

Additionally, in performing single pass welding of thick steel plates by EGW welding, welding efficiency seems to be able to be improved by arranging each welding torch (welding electrode) on one face side (hereinafter may be referred to as front face side) of the thick steel plates and another face side thereof (hereinafter may be referred to as back face side, in which the front face and the back face do not represent specific faces and are described relative to each other) and performing single pass welding simultaneously from both face sides thereof.

Preferred is an arc welding or EGW welding method as described above, in which after adopting a groove shape open on both faces, each electrode is arranged on each of the front face side and the back face side of members while considering reduction of a groove cross-sectional area, i.e., the amount of input heat for welding, so as to perform single pass welding simultaneously on both faces thereof.

The adoption of such a device and such a method causes a problem in that since ascending speeds of the welding torches on both sides do not become the same and a height position of the molten metal surface level of the molten metal pool becomes different between the front face side and the back face side of the thick steel plates, each molten weld metal on the front face and the back face is not integrally solidified together (see Figure 4B). In this case, a weld metal 131 on a side where the molten weld metal has first been solidified is reheated by a molten weld metal 131a that will be solidified later (see a reheat-affected zone H in Figure 4B), whereby toughness of the weld zone can be reduced. Examples of possible reasons for occurrence of such a phenomenon include, besides a difference in the groove cross-sectional area between the front face side and the back face side, a slight difference in the feeding speed of the welding wire between the welding devices on the front face side and the back face side. Additionally, in the above-described welding method, the weld metal on one side is first solidified, and then a near-root zone of the solidified weld metal is re-melted by the weld metal on the side where the welding torch ascends later. In this case, there is also a concern that incomplete fusion may occur in the root zone.

Thus, in order to solve such a discrepancy in the ascending speed as described above, the present inventor came up with an idea of providing the root opening and the root face of the groove so as to satisfy a predetermined relationship so that a molten metal can freely move from a molten pool formed on any one face side of the members to a molten pool formed on the other face side thereof. In other words, a guide passage for the molten metal is formed by providing a root opening and a root face having appropriately specified sizes in a middle of groove faces on the front and the back face sides. Forming such a guide passage to cause the molten metal to move in the groove allows the molten metal surface level of the molten pool formed in the groove portion of each of the front and the back face sides to be uniform across the entire plate thickness. Furthermore, as the welding electrodes move in synchronization with the molten metal surface level of the molten weld metal generated in the groove, the welding electrodes are caused to ascend at the same welding speed on both of the front and the back faces. This will be able to eliminate the concerns about the occurrence of an incomplete fusion defect near the center of the plate thickness and the reduction of toughness due to reheat described above.

Then, in the present invention, as described above, each welding electrode is arranged on the front and the back face sides of the thick steel plates, and welding is simultaneously performed from downward to upward in the vertical direction. After that, as depicted in Figure 4A, there is formed a guide passage 21 that allows a molten weld metal 31a to be guided to pass between the front and the back face sides of the thick steel plates 1, thereby allowing full penetration welding by which a weld metal is formed from the front face to the back face at one time, i.e., single pass welding. Thus, both welding efficiency improvement and weld defect suppression can be achieved.

[First Embodiment]

A multi-electrode electrogas arc (EGW) welding method as a first embodiment of the present invention adopts:

disposing the ends 1a of the thick steel plates 1 to be welded so as to face each other to form a groove 2 between the ends of the steel plates;
providing a root opening RO and a root face RF of the groove 2 so as to satisfy a predetermined relationship (details of which will be described later);
disposing one or two or more electrogas arc welding electrodes 5 in the groove 2 on each of a front face side 1A and a back face side 1B of the thick steel plates 1; and
simultaneously performing welding from downward to upward in a vertical direction;

in which a moving speed of each of the electrogas arc welding electrodes 5 is controlled so that the each electrogas arc welding electrode 5 moves in synchronization with a molten metal surface level of a molten weld metal generated in the groove 2.

The following will be a detailed description of steps of the EGW welding method for the thick steel plates 1 in the first embodiment of the present invention.

The ends 1a of the thick steel plates 1 intended to be welded are disposed facing each other to form the groove 2 between the ends of the steel plates. The thick steel plates as objects to be welded in the present embodiment may have a plate thickness, for example, ranging from 40 to 300 mm, as depicted in Figures 1A and 1B. In addition, a steel component of the thick steel plates 1 is not particularly limited, and any conventionally known component can be adopted without any limitation. Then, as depicted in Figures 1A and 1B, the present embodiment can produce a steel plate joint or the like to be used in a large structure by butting the ends 1a of the thick steel plates 1 as described above to each other and performing EGW welding (see Figures 2A and 2B and Figures 3A and 3B).

The groove formed between the ends of the steel plates by disposing the ends 1a of the thick steel plates 1 so as to face each other can be an X-shaped groove as a double-sided groove, like the groove 2 depicted in Figure 1B. The term, "groove" refers to a groove to be formed between base metals to be welded on the basis of JIS Z 3001-1: 2008. The shape of the groove in the present embodiment is not limited to that of the X-shaped groove in the example depicted in Figure 1B and can be any shape as long as the groove is one that allows welding to be performed on each of the front face side 1A and the back face side 1B of the thick steel plates 1, i.e. a double-sided groove. Examples of an adoptable double-sided groove include, besides the X-shaped groove, those with various shapes such as a K shape, double J shape, H shape, and I shape, as specified by JIS Z 3001-1: 2008. In this case, the double-sided groove does not necessarily need to be an exact X-shaped or H-shaped groove having a shape and a size symmetrical at the center of the plate thickness, and, for example, can be a V-shaped groove having a large depth in a plate thickness direction on the front face side and a V-shaped groove having a smaller depth in the plate thickness direction on the back face side than the front face side, as depicted in Figure 6B. In addition, both of the front and the back face sides of the steel plates do not necessarily need to have the same groove shape. For each of the front face and the back face, each one from among a V shape, U shape, I shape, single bevel shape, and J shape may be selected as a groove shape to freely combine the shapes together. Examples of such a combination of groove shapes include a combination of a U-shaped groove on the front face side of the steel plates and a single bevel groove on the back face side thereof.

In order to dispose the ends 1a of the steel plates 1 so as to face each other to form the groove between the ends thereof, an electrogas arc (EGW) welding device 4, as an example depicted in Figure 2A, may be used, and the two thick steel plates 1 to be welded may be placed on a base 41, as depicted in Figure 1A.

In the present embodiment, the root opening RO and the root face RF of the groove 2 are provided so as to satisfy a predetermined relationship. This is done to secure the guide passage 21 that allows the molten weld metal 31a generated in the groove 2 at each of the front face side 1A and the back face side 1B to be guided to pass between the front and the back face sides 1A and 1B, as depicted in Figure 1B (also see Figure 4A). The guide passage 21 thus secured allows the molten weld metal 31a to be freely guided to pass between both of the front and the back face sides 1A and 1B, thereby keeping the molten metal surface level of the molten weld metal 31a equal on the front and the back face sides. As a result, a timing at which the molten weld metal 31a is solidified to become a weld metal 31 also becomes substantially the same between the front face 1A and the back face 1B. This can, for example, suppress the weld metal already solidified on the front face side from being partially reheated (remelted) by the molten weld metal on the back face side, preventing reduction in toughness of the weld zone. Accordingly, there can be obtained the effect of suppressing weld defects.

In the present embodiment, the predetermined relationship satisfied by the root opening RO and root face RF of the groove 2 is as follows:

The root opening RO of the groove ranges from 0 to 16 mm, where, in a range of $0 \leq RO < 1$ mm, the root face RF satisfies a relationship represented by a formula 1 below; in a range of $1 \leq RO < 10$ mm, the root face RF satisfies a relationship represented by a formula 2 below; and in a range of $10 \leq RO \leq 16$ mm, the root face RF satisfies a relationship represented by a formula 3 below:

$$RF \leq 7.8RO + 4.0 \text{ mm} \quad \ldots\ldots \text{ formula 1}$$

$$RF \leq 4.8RO + 7.0 \text{ mm} \quad \ldots\ldots \text{ formula 2}$$

$$RF \leq 55 \text{ mm} \qquad \ldots\ldots \text{formula 3}$$

{in the formulae 1, 2, and 3, RF represents root face and RO represents root opening}.

Root face RF and root opening RO mean lengths of things defined by JIS Z 3001-1: 2008, unless otherwise specified in the present specification, and a unit indicating a length of each thereof is mm. For example, in forming the guide passage 21 as described above, a length corresponding to a passage width (a plate width direction) of the guide passage 21 is referred to as root opening RO, and a length corresponding a passage length (a plate thickness direction) of the guide passage 21 is referred to as root face RF, as depicted in Figure 1B.

Figures 5 depict the relationship formulae 1 to 3 given above.

As depicted in a graph of Figure 5A, the root opening RO is from 0 to 16 mm and the root face RF is from 0 to 55 mm.

An upper limit of the root opening RO is 16 mm. When the root opening RO is 16 mm, the root face RF has an upper limit value of 55 mm. When both of the root opening RO and the root face RF are not less than the above values, i.e., values of both thereof fall outside a right upper region of Figure 5A, influence of arc from the EGW welding electrodes is hardly exerted on the groove faces, particularly on the root faces RF, causing incomplete fusion. In addition, due to the increased root opening RO, obviously, the groove cross-sectional area increases, and the heat input also increases. Accordingly, when the root opening RO exceeds 16 mm, the level of the heat input becomes excessively large, which reduces toughness and strength of the HAZ and the molten metal. Thus, the length of the root opening RO exceeding 16 mm is not practical.

As depicted in the graph of Figure 5A, in the relationship between root face RF and root opening RO, as the root opening RO becomes larger, the root face RF can be made longer. In general, as the root face RF becomes longer, an undeposited portion more easily occurs. Thus, when the root face RF is made long, the root opening OP is also made large in width to allow arc generated from electrode tips to be more easily applied to the entire root faces RF forming the guide passage 21 so as not to leave any unmelted region and also allow the molten weld metal heated to high temperature by the arc to be sufficiently smoothly supplied and distributed, thereby preventing an unwelded defect from occurring in the guide passage portion 21.

A lower limit of the root opening RO is 0 mm. When the root opening RO is 0 mm, the upper limit value of the root face RF is 4 mm. Even when the root opening RO is 0 mm, there can be obtained a penetration depth with a distance of 4 mm in the length of the plate thickness direction (root face RF) by effects of radiant heat of arc, thermal conduction from the molten weld metal, convection, and the like, so that any unwelded defect does not occur.

More preferably, the root opening RO is in a range of not less than 3 mm and not more than 8 mm, and the root face RF is in a range of not more than 8 mm. The reason for this will be described as follows. One factor causing incomplete fusion is that heat of arc generated from the electrode tips is not sufficiently applied to the groove faces, particularly to the root faces RF, and thus a partial region of the groove faces is not heated up to a melting point of the steel materials. When the root opening RO is below 3 mm, arc is hardly applied to the guide passage portion (root faces RF), thereby making it difficult for arc heat to sufficiently reach the portion. In addition, a heated molten weld metal also hardly passes through the guide passage. Thus, the root face RF is preferably shortened according to the root opening RO.

The reason for that the root opening RO is preferably not more than 8 mm is that when the root opening RO exceeds 8 mm to become larger, both of the root faces RF facing each other and forming the guide passage become distal from arc, thus increasing a possibility that the groove faces forming the lengths of the root faces RF cannot be sufficiently heated.

The reason that the root face RF is preferably not more than 8 mm is that, since the root faces RF forming the guide passage are needed to be sufficiently heated, a root face RF of $\leq$ 8 mm would allow arc heat to be sufficiently applied to the entire root faces RF.

Usually, groove shape, groove angle, size, and the like are determined by comprehensively considering the size of the welding torches, the number of the electrodes, amplitude of oscillation motion, and the like. An amount of input heat in single pass welding is substantially proportional to a groove cross-sectional area, and a welding speed is inversely proportional to the groove cross-sectional area. Accordingly, in order to reduce the amount of input heat as much as possible and improve the welding speed, reduction in the groove cross-sectional area is effective. When using an X-shaped groove, the groove cross-sectional area monotonously decreases as the length of the root face RF increases, so that making the root face RF long is effective. However, as described above, from the viewpoint of prevention of an undeposited portion, increase in the root opening RO is also preferably considered in order to increase the root face RF. Thus, the present inventor thought that it was meaningful to study a correlation between root opening RO and root face RF from the viewpoint of efficiency improvement and joint quality improvement, and performed intensive and extensive experiments.

Specifically, through verification experiments described below, the inventor obtained a correlation between root opening RO and root face RF for preventing occurrence of an undeposited portion, depicted in the graph (regions) of Figure 5A.

First, using a steel plate made of a steel type B1 given in Table 2 below and having a plate thickness of 102 mm and a steel plate made of a steel type A and having a plate thickness of 80 mm, various sizes of RO and RF were set and an X-shaped groove was formed at ends of the steel plates by machine processing to perform four-electrode or two-electrode EGW welding. Table 1 below depicts welding conditions common in the present experiment, and Table 2 below depicts a list of steel types combined with data of Examples described later.

Table 1

| Steel plate | | Groove shape | | Welding conditions for VEGA welding method | | | | | | | | | Oscillation conditions | | | |
|---|---|---|---|---|---|---|---|---|---|---|---|---|---|---|---|---|---|
| Steel type | Plate thickness t (mm) | Groove shape | Groove angle $\theta$ (°) | Welding current $I$ (A) | | | | Arc voltage $E$ (V) | | | | Wire feeding rate (m/min) | Interelectrode distance (mm) | Oscillation width (mm) | Number of times of oscillation (min-1) | Electrode stop time (s) | |
| | | | | | | | | | | | | | | | | Opening side | Root side |
| B1 | 102 | X shape | 20 | Electrode No. | | | | Electrode No. | | | | 14 | 15 | 10 | 20 | 1.1 | 1.1 |
| | | | | 1 | 2 | 3 | 4 | 1 | 2 | 3 | 4 | | | | | | |
| | | | | 360 | 330 | 360 | 330 | 42 | 42 | 42 | 42 | | | | | | |
| A | 80 | X shape | 15 | Electrode No. | | | | Electrode No. | | | | 14 | - | 25 | 16 | 1.1 | 1.1 |
| | | | | 1 | 2 | | | 1 | 2 | | | | | | | | |
| | | | | 360 | 360 | | | 40 | 40 | | | | | | | | |

Weld materials applied: conforming to JIS Z 3319 YFEG-42; welding wire diameter $\varphi$ 1.6 mm Shielding gas: 100% $CO_2$, flow rate: 35 l/min.

Oscillation conditions: each electrode performs a cyclically oscillating motion (oscillation).

Oscillation conditions were specified by amplitude, number of times of oscillation per minute, and stop time at oscillation ends.

Amplitude, number of times of oscillation, and stop time, respectively, were indicated as oscillation width, number of times of oscillation, and electrode stop time in the Table.

When two or more electrodes were disposed in the groove on the plate front face side (back face side), the electrodes were oscillated in collaboration with each electrode arranged on the front face side or back face side of the steel plates, at the same amplitude, by the same number of times of oscillation, and with the same stop time.

Table 2

| Steel type Symbol | Plate thickness t (mm) | Chemical composition (mass%; excluding Ca, Mg, and REM in ppm.) | | | | | | | | | | | | | | | |
|---|---|---|---|---|---|---|---|---|---|---|---|---|---|---|---|---|---|
| | | C | Si | Mn | P | S | Al | B | Cu | Ni | Cr | Mo | Nb | Ti | Ca | Mg | REM |
| N | 40 | 0.120 | 0.20 | 1.52 | 0.004 | 0.002 | 0.027 | 10 | | 0.12 | | | 0.02 | 0.012 | | 20 | 8 |
| D | 51 | | | | | | | | | | | | | | | | |
| E | 71 | | | | | | | | | | | | | | | | |
| A | 80 | | | | | | | | | | | | | | | | |
| B1, B2 | 102 | 0.095 | 0.15 | 1.41 | 0.005 | 0.002 | 0.025 | 9 | 0.20 | 0.18 | | 0.01 | 0.01 | 0.01 | 12 | 20 | 8 |
| C | 150 | | | | | | | | | | | | | | | | |
| F | 210 | 0.110 | 0.23 | 1.44 | 0.007 | 0.003 | 0.013 | 10 | 0.17 | 0.35 | 0.03 | | 0.02 | 0.01 | | 20 | 8 |
| G | 300 | | | | | | | | | | | | | | | | |

Then, ultrasonic testing (UT) was performed on obtained butt-welded joints, and, as needed, direct observation was performed on cross-sectional macro specimens to confirm the presence or absence of occurrence of any unwelded defect in the guide passage portion (root face portion).

As a result, observation results as depicted in graphs of Figure 5B and 5C were obtained. The results showed that the occurrence of an unwelded defect depends on the sizes of RO and RF. Thus, preferable ranges of RO and RF were specified as follows:

Figure 5B is a graph of thick steel plates 1 with a plate thickness t of 102 mm, and Figure 5C is a graph of thick steel plates 1 with a plate thickness t of 80 mm. Even when the plate thickness t changes from 102 mm to 80 mm, there is no change in regions without any incomplete penetration. In other words, setting the sizes of RO and RF to values in the regions, without depending on plate thickness, can ensure suppression of incomplete penetration.

Based on the observation results, the formulae 1 to 3 representing the predetermined relationships satisfied by the root opening RO and the root face RF of the groove 2, were specified as given above.

In the graph of Figure 5A, a region 1 is a region indicating the range represented by the formula 1; a region 2 is a region indicating the range represented by the formula 2; and a region 3 is a region indicating the range represented by the formula 3. The results of the intensive and extensive studies by the present inventors, showed that the relationship between root opening RO and root face RF is different between the region 1 with a range of $0 \leq RO$ (mm) $< 1$, the region 2 with a range of $1 \leq RO$ (mm) $< 10$, and the region 3 with a range of $10 \leq RO$ (mm $\leq 16$, as indicated by a relation curve of Figure 5A. Accordingly, the present invention specifies the formulae 1 to 3 respectively different according to the root opening RO. Thereby, in the entire range of the root opening RO (mm) of from 0 to 16 (mm), the relationship between root opening RO and root face RF can be set in an appropriate range. As a result, a more remarkable effect can be obtained in terms of allowing achievement of both welding efficiency improvement and weld defect reduction.

Next, one or two or more electrogas arc welding electrodes are disposed in the groove 2 on each of the front and the back face sides 1A and 1B of the thick steel plates 1. The front face side 1A and the back face side 1B of the steel plates may be referred to also as one face side and the other face side of the steel plates. Front face and back face do not represent specific faces and are described relative to each other. As the example depicted in Figures 2A and 2B, each two EGW welding electrodes 5 may be disposed in the groove 2 at the ends 1a of the thick steel plates from each of the front face 1A side and the back face 1B side. It is enough to dispose each one or two or more EGW welding electrodes 5 from each of the front face 1A side and the back face 1B side, and the number of the electrodes can be appropriately determined according to the plate thickness of the thick steel plates 1. In this case, a determination criterion applicable for determining the number of the electrodes may be conventional knowledge that steel plates having a plate thickness of about 40 to 45 mm can be welded per electrode. For example, as an example depicted in Figure 6B, when sizes and shapes of grooves 2a and 2b are different between a front face 10A side and a back face 10B side of thick steel plates 10, different numbers of EGW welding electrodes may be disposed on the front face 10A side and the back face 10B side according to the sizes and shapes thereof. In the example depicted in the drawing, two EGW welding electrodes 5 are disposed on the front face 10A side of the thick steel plate 10, whereas one EGW welding electrode 5 is disposed on the back face 10B side thereof.

A tip 51 of each of the EGW welding electrodes 5 may be disposed so as to face a steel-plate plate thickness direction of the thick steel plates 1, particularly so as to face the guide passage 21, as depicted in an enlarged part of Figure 3A. When the front face (or the back face) of the steel plates is a reference face, an angle P (°) formed by a substantially vertical direction within the reference face and a direction in which a wire is extended from a tip of the torch is defined as an approach angle of each welding electrode 5. A vertically downward direction is set to 0°. The approach angle of the torch is preferably not less than 0° and not more than 40°, and more preferably not less than 20° and not more than 35°. The reason for this will be described as follows. Incomplete fusion occurs when heat of arc generated from the electrode tips does not sufficiently reach the groove faces, particularly the root faces RF, and thus a partial region of the groove faces is not heated up to a melting point of the steel materials and molten weld metal is not supplied in an amount sufficient to cover newly generated faces of the groove faces melted after having reached the melting point. However, when the angle P is not less than 0° and not more than 40°, arc is sufficiently applied to the root faces RF forming the guide passage where incomplete fusion can particularly easily occur, as well as the surface of the molten weld metal is also simultaneously heated, which can reduce the possibility of occurrence of incomplete fusion. Even when the approach angle of the torch is 0°, adoption of an appropriate root opening RO and an appropriate root face RF specified by the formulae 1 to 3, plus the effects of thermal conduction from the molten weld metal, convection, and the like, prevent the occurrence of unwelded defects. By setting the approach angle of the torch to be, more preferably, not less than 20° and not more than 35°, arc heat is appropriately distributed into heat to be applied to both the groove faces facing each other and heat to be applied to the molten weld metal, thereby allowing incomplete fusion to be suppressed.

Then, in the present embodiment, as depicted in Figure 2A, welding is performed from a welding start position A on a lower side in the vertical direction to a welding end position B, simultaneously on the front face 1A side and the back face 1B side of the thick steel plates 1. The phrase "from downward to upward in the vertical direction" means not only to move the welding electrodes upward while keeping the thick steel plates fixed but also to move the thick steel plates downward while keeping the welding electrodes fixed. This welding is a full penetration welding by which a molten metal is formed from the front face to the back face at one time, i.e., single pass welding. Because of being single pass welding, even in EGW welding of the thick steel plates 1 having a large plate thickness of about 40 to 300 mm, the welding can be performed without reducing welding process efficiency.

There may be formed a molten pool (molten weld metal) at the welding start position A while feeding the welding wires, and furthermore, the EGW welding electrodes 5 may be moved upward to the welding end position B along the groove 2 by automatic carriages 42. As depicted in Figure 2A, the EGW welding electrodes 5 may be integrated with the automatic carriages 42. In this way, sequentially, the molten pool composed of the molten weld metal 31a is formed in the groove 2, and solidification of the molten pool (the molten weld metal 31a) forms the weld metal 31. Throughout the steps as described above, the weld zone 3 is formed in the groove 2, and the thick steel plates 1 are welded to each other.

Then, in the present embodiment, a moving speed of the welding electrodes 5 is controlled so that the welding electrodes 5 move in synchronization with the molten surface level of the molten weld metal 31a generated in the groove 2. Providing the above guide passage 21 leads to the formation of a single shared molten pool composed of the molten weld metal 31a, thereby achieving simultaneous EGW welding stably performed on both faces. Although obvious, since the single shared molten pool is formed, the molten metal surface level of the molten metal is at the same height on the front face side and the back face side. The welding electrodes 5 move in synchronization with the molten metal surface level of the molten weld metal 31a, thereby allowing synchronization of an ascending speed of each of the EGW welding electrodes 5 disposed on both face sides of the thick steel plates 1. Thus, simultaneous welding can be performed much more stably, therefore leading to prevention of weld defects. The synchronization means temporal matching of motion or control for temporally matching motion. The phrase "the welding electrodes 5 move in synchronization with the molten metal surface level" means that the welding electrodes 5 move at the same speed as a rising rate of the molten metal surface level in the same direction in which the molten metal surface level rises, or move under control so as to move at the same speed in the same direction.

A means for the synchronization is not particularly limited as long as the object of the synchronization can be attained. For example, a current detection means, which are not depicted in the drawings, for detecting changes in welding current may be provided on any one of the EGW welding electrodes 5. When such a current detection means is provided, although the surface (the molten metal surface level) of the molten weld metal 31a rises to reduce an extension length of the wire extended from the tip 51 and thereby the welding current value increases, the current detection means is caused to monitor temporal changes in the welding current value and calculate an increase rate of the welding current value, thereby allowing detection of the rising rate of the molten metal surface level. Then, based on results of the calculation by the current detection means, the moving speed of the EGW welding electrodes 5 (the automatic carriages 42) can be controlled so that each of the EGW welding electrodes 5 disposed on the front face 1A side and the back face 1B side moves upward in synchronization with the rise of the molten metal surface level, i.e., moves upward at the same rate as the rise of the molten metal surface level in the same direction as the direction in which the molten metal surface level rises. With the structure thus formed, a distance (arc length) between the surface of the molten weld metal 31a and the tip 51 of each EGW welding electrode 5 can be set in a predetermined range, for example, a range of from 15 to 60 mm, and more preferably from 15 to 30 mm. Thereby, simultaneous welding can be performed much more stably, leading to prevention of weld defects.

In addition, since the molten metal surface level of the molten weld metal 31a has substantially constant temperature and emissivity, intensity of infrared light changes according to a distance from the molten metal surface level. With the use of the phenomenon, the molten metal surface level can be detected by a radiation thermometer disposed at a predetermined position. In addition, the molten metal surface level can also be detected by a CCD camera or ultrasonic wave. Based on a detection signal detected by these devices, the EGW welding electrodes 5 (the automatic carriages 42) can be moved so that a distance between the molten metal surface level of the molten weld metal 31a and the electrode tips 51 is in a predetermined range, for example, in a range of from 15 to 60 mm, and more preferably of from 15 to 30 mm. In this manner, the moving speed of the EGW welding electrodes 5 (the automatic carriages 42) can be controlled so that the EGW welding electrodes 5 move upward in synchronization with the rise of the molten metal surface level.

There may be adopted a structure in which a means for detecting a signal of the above-mentioned welding current value, infrared light intensity, an image, ultrasonic reflection time, or the like and/or a control means for regulating the moving speed of the automatic carriages 42 on the basis of detection signals detected thereby are provided in carriage drive control devices 43 depicted in Figure 2A. These means may be provided in only one of the front face side 1A and the back face side 1B, or on both thereof. Providing the detection means only on one of the faces is advantageous in terms of cost saving. Even if the height of the molten metal surface level of the molten pool is different between the front face side and the back face side of the thick steel plates (see Figure 4B), providing the detection means on both faces allows detection of an abnormal difference of the molten metal surface level, whereby there can be taken necessary measures, as appropriate, such as alarm issuing, suspension of welding, correction of electrode tip positions, and regulation of arc current and voltage. In order to determine whether the difference of the molten metal surface level is an abnormal phenomenon or not, deviation of positions or speeds between the automatic carriages 42 on both faces can also be considered. Thereby, determination accuracy can further be improved.

In the present embodiment, simultaneous double-sided welding can be performed from the front face 1A and the back face 1B of the thick steel plates 1. However, there can be cases where although temporarily or slightly, the ascending speed of the welding torches on both sides is not the same, and the height position of the molten metal surface level of the molten pool is different between the front face side and the back face side of the thick steel plates. Examples of reasons for that include, besides a slight difference in the groove cross-sectional area between the front face side and the back face side of the thick steel plates, a slight difference in feeding speeds of the welding wires occurring between the respective welding devices on the front face side and the back face side. Additionally, as a phenomenon caused by a reason other than those mentioned above in a very short time range, the moving speed of each respective EGW welding electrode on each face sometimes slightly deviates due to characteristics of the ascending motion of the device and the like. Usually, when performing EGW welding in a vertically upward position, the EGW welding electrodes 5 perform a stepwise ascending motion while repeating an upward movement and a short stop. However, for example, in a situation immediately before starting the stepwise ascending motion on the back face side at a moment immediately after the ascending motion on the front face side, a slight difference can occur between vertical positions of the devices on the front and the back face sides, although in a very short time. Accordingly, in the present invention, vertical deviation of the EGW welding electrodes 5 on each of the front face 1A side and the back face 1B side, i.e., the deviation thereof in a direction in which welding proceeds is preferably not more than 10 mm. This is an allowable range for the simultaneous EGW welding. When the deviation of the EGW welding electrodes 5 is not more than 10 mm, the molten metal surface level of the molten weld metal 31a is not significantly different. Thus, the molten weld metal 31a can be guided to pass between the front face 1A side and the back face 1B side through the guide passage 21 to allow the formation of a molten pool shared between both face sides of the thick steel plates 1.

The above synchronization means can be controlled by adding a condition that the vertical deviation of the welding electrodes 5 on the front and the back face sides is in a predetermined range, for example, in a range of not more than ±10 mm, preferably not more than ±5 mm, and more preferably not more than ±3 mm.

The following will be a description regarding a ground that, in the present embodiment, the deviation of the direction in which welding by the EGW welding electrodes 5 proceeds on each of the front face 1A side and the back face 1B side of the thick steel plates 1 is preferably set to be not more than 10 mm.

Typically, EGW welding is performed while applying a welding current of about from 300 to 400 A to the EG welding electrodes 5. Additionally, an average depth (mm) of the molten pool composed of the molten weld metal 31a is generally said to be about 1/10 (mm) of a welding current value (A). In other words, when the welding current is in the above range, the depth of the molten pool can be estimated to be about 30 mm. As described above, in the present invention, the most important is that each molten pool composed of the molten weld metal 31a generated in the groove 2 on each of the front face 1A side and the back face 1B side of the thick steel plates 1 is made into one shared molten pool by the guide passage 21. In order to maintain such a shared molten pool, regarding a deviation in a depth direction of the molten pool, i.e., a deviation of the molten metal surface level of the molten weld metal 31a, an allowable range of the deviation is estimated to be about ±1/3, i.e., about ±10 mm on the front face 1A side and the back face 1B side. Thus, when the position of the tip 51 of each EGW welding electrode 5 deviates by not more than ±10 mm in the direction in which welding proceeds, the welding can be regarded as substantially simultaneous welding and the deviation can be said to be in the allowable range.

Furthermore, as described above, by providing the synchronization means having the molten metal surface level detection means on both faces, a difference in the molten metal surface level between the front face and the back face can be detected and set in a predetermined range, for example, in a range of not more than ±10 mm, preferably not more than ±5 mm, and more preferably not more than ±3 mm.

Welding may be performed while oscillating the EGW welding electrodes 5 in the plate thickness direction of the thick steel plates 1. This is more preferable since a more remarkable effect of suppressing weld defects can be obtained.

In addition, all of the EGW welding electrodes 5 do not necessarily need to be oscillated. For example, when each one welding electrode 5 is disposed on each of the front face side and the back face side of the thick steel plates 1, welding can be performed by oscillating only the electrode on the front face side, without oscillating the electrode on the back face side. When each two electrodes are disposed on each of the front and the back face sides, welding can be performed by oscillating only the electrodes located on opening sides of the front and back face sides, without oscillating the electrodes located on the root side thereof. In this way, welding can be performed by oscillating one or some of the electrodes while keeping remaining one or more electrodes fixed, without oscillating them.

The thick steel plate 1 may be subjected to bend processing into a steel pipe shape, and then, ends 11a of the thick steel plate disposed so as to face each other by the bending processing may be welded to each other.

As depicted in Figure 7A, the thick steel plate 1 is made into a pipe shape by bending processing. In this case, as a processing method, a UO or UOE processing method conventionally used to manufacture steel pipes can be adopted without any limitation. A steel pipe made of a thicker steel plate material can be obtained by processing the plate material into a steel pipe shape by bending processing using a bending roll or the like. A groove between the ends 11a, 11a disposed so as to face each other by the bending processing is seam welded by the EGW welding method as described above or any other welding method. In addition, the steel pipe 11 can be vertically erected to weld a vertical seamed portion by using the multi-electrode EGW welding method of the present invention. In this way, there can be obtained the steel pipe 11 made of the thick steel plate.

In the multi-electrode electrogas arc welding method for the thick steel plates 1 according to the present embodiment as described above, the molten weld metal 31a is allowed to be guided to pass between both faces of the thick steel plates 1, and the welding electrodes are moved in synchronization with the molten metal surface level of the molten weld metal 31a to perform EGW welding simultaneously from both face sides of the thick steel plates 1. Adopting this process allows welding efficiency improvement by single pass welding and the effect of suppressing weld defects to be simultaneously achieved, even when performing butt welding of thick steel plates 1 having a plate thickness of about 40 to 300 mm in a vertical position. The number of the electrodes can be appropriately determined according to the plate thickness of the steel plates. In that case, there may be applied the conventional knowledge that steel plates having a plate thickness of about 40 to 45 mm can be welded per electrode. For example, the plate thickness of the steel plates may be not more than 80 mm. The plate thickness of the steel plates may be not less than 70 or 80 mm, or not less than 100 mm. The plate thickness of the steel plates may be limited to not more than 250 mm, not more than 200 mm, or not more than 160 mm.

[Second Embodiment]

Next, a description will be given of a multi-electrode electrogas arc (EGW) circumferential welding method for steel pipes as a second embodiment of the present invention by mainly referring to Figures 7 and 8.

The present embodiment is a method for performing circumferential welding by disposing pipe ends of a plurality of steel pipes 11 having a steel pipe shape so as to face each other to form the groove between the ends of the steel pipes, and is somewhat different from the EGW welding method of the first embodiment. In the description below, the same structures as those in the EGW welding method for thick steel plates according to the above-described first embodiment are denoted by the same reference signs and a detailed description thereof will be omitted.

In the multi-electrode EGW circumferential welding method for steel pipes 11 of the present embodiment, as depicted in Figures 7A and 7B, a thick steel plate with the groove 2 formed by butting the respective ends 11a, 11a thereof to each other is processed into a pipe shape having an inner diameter of not less than 300 mm; then, pipe ends 11b of a plurality of steel pipes 11 having the pipe shape are disposed so as to face each other to form a groove between the ends of the steel pipes, or the pipe end 11b of the steel pipe 11 and a pipe end of another pipe-shaped member (not depicted in the drawings) are disposed so as to face each other to form a groove between the ends; and circumferential welding is performed. In this case, in the present embodiment, the EGW welding devices are disposed on an inner face of a pipe-shaped body part. Accordingly, there is a need for space allowing for the placement of the EGW welding devices, and thus pipe-shaped members having an inner diameter of not less than 300 mm are regarded as being applicable. As depicted in Figure 8, the EGW welding electrodes 5 are disposed in a groove 12 (see Figures 7A and 7B), and EGW welding is performed along a circumferential groove face of each of the pipe ends 11b, 11b (see Figures 7A and 7B) butted to each other so that a weld line (a circumference) is substantially included in a vertical plane.

The present embodiment will be described by taking an example in which the plurality of steel pipes 11 formed into the steel pipe shape are used as workpieces, and the pipe ends 11b, 11b of the steel pipes 11 are bonded to each other by circumferential welding using the EGW welding. In addition, the steel pipes 11 may have a plate thickness of from 40 to 300 mm, as with the thick steel plates 1 of the first embodiment. Additionally, although not depicted in the drawings, a pipe-shaped member and a joint member to be used as needed may also be made of a thick plate with a thickness of from 40 to 300 mm.

Additionally, in the example described in the present embodiment, as depicted in Figure 8, each two EGW welding electrodes 5 are disposed so that the tips 51 thereof are directed to a steel-plate plate thickness direction of the steel pipes 11, particularly to the guide passage portion in the groove 12 at the pipe ends 11b from each of a front face (an outer face) 11A side and a back face (an inner face) 11B side of the steel pipes 11.

Additionally, the present embodiment will be described by way of an example in which, using an EGW circumferential welding device 40 provided with a positioner means 45, like an example depicted in Figure 8, circumferential welding is performed by a single pass, simultaneously from both of the inner and outer faces of the steel pipes 11. When applying EGW welding to circumferential welding, the EGW welding device is allowed to substantially maintain a vertical position by keeping the welding electrodes fixed near a position of around 9 o'clock (or 3 o'clock) as shown on a clock face when viewed from a pipe length direction and then rotating the steel pipes 11 as the workpieces to proceed welding.

Thus, from the characteristics of EGW welding method primarily performed in a vertical welding position, there is less risk of causing leakage of molten metal or the like, so that the above device structure is considered to be reasonable.

In the present embodiment, first, the pipe ends 11b, 11b of the plurality of steel pipes 11 are disposed so as to face each other, and the groove 12 is formed between the ends of the steel pipes (or pipe-shaped members). A shape of the groove 12 is not limited to the X-shaped groove of the example depicted in Figure 7B and can be any shape as long as it is a groove that allows welding to be performed on each of the front face 11A and the back face 11B of the steel pipes 11 (or pipe-shaped members), i.e., a double-sided groove.

As depicted in Figure 7(B), the pipe ends 11b of the steel pipes 11 are butted to each other while securing a guide passage 12A through which the molten weld metal 31a generated in each groove 12, 12 on both faces can be guided to pass between the front face 11A and the back face 11B. In addition to this, as depicted in Figure 8, the steel pipes 11 are mounted on rollers 45a of the positioner means 45 for rotating the pipes around center axes of the respective pipes so that the center axes thereof are substantially concentric and substantially horizontal.

As depicted in Figure 8 (also see Figures 7A and 7B), one or two or more EGW welding electrodes 5 are each disposed in the groove 12 from both of the front face 11A side and the back face 11B side of the steel pipes 11 (each two electrodes on each face side, four in total in the example of Figure 8). Next, single pass circumferential welding is performed simultaneously on both of the front face 11A side and the back face 11B side of the steel pipes 11 while rotating the steel pipes 11 in a direction R depicted in Figure 8. The rotation of the steel pipes 11 is a motion corresponding to the descending movement of the thick steel plates intended by the phrase "from downward to upward in the vertical direction" in the first embodiment.

The plurality of steel pipes 11 are single-pass welded by the method as described above.

In the present embodiment, as with the first embodiment, the pipe ends 11b, 11b of the steel pipes 11 are circumferentially welded by performing single pass EGW welding in a substantially vertical position from a welding start position A1 to a welding end position B1 depicted in Figure 8. Thereby, there can be manufactured a steel pipe column or the like formed by connecting a plurality of the thick steel plates 11 and used to construct a large structure.

Hereinafter, a more detailed description will be give of the steps of the multi-electrode EGW welding method for the steel pipes 11 of the present embodiment and conditions therefor.

In the present embodiment, as with the first embodiment, first, the X-shaped groove 12 as exemplified in Figure 1B is formed between the respective ends 11b, 11b that will become a weld zone of a planar thick steel plate (see reference sign 12 in Figure 7A). The pipe ends 11b become a zone to be welded when performing butt welding of the steel pipes 11 each obtained after processing the steel plate into a steel pipe shape. In addition, regarding the groove shape, as with the first embodiment, various shapes other than the X shape can be appropriately adopted.

Next, the steel pipes 11 are mounted on the rollers 45a of the positioner means 45, as depicted in Figures 7 and 8. In this case, sizes of a root opening RO and a root face RF and a relationship therebetween at the respective pipe ends 11b, 11b butted to each other can be the same as those in the first embodiment.

Next, as depicted in Figure 8, two EGW welding electrodes 5 are disposed in the groove 12 formed on both of the front face 11A side and the back face 11B side (see Figures 7A and 7B), and the tips 51 of the EGW welding electrodes 5 are disposed to be directed to the plate thickness direction of the steel pipes 11 as workpieces.

Then, as with the first embodiment, while forming a molten pool (the molten weld metal 31a) by feeding welding wires at the welding start position A1, EGW welding is simultaneously performed in the substantially vertical upward direction from the welding start position A1 to the welding end position B1 indicated in Figure 8. In this case, the EGW welding is performed so as to secure the guide passage 12A (see Figure 7B) through which the molten weld metal 31a formed in the groove 12 between the respective pipe ends 11b butted to each other can be guided to pass. Thereby, the molten metal surface level of the molten weld metal 31a is maintained equal between both of the front face 11A side and the back face 11B side, as with the case of the first embodiment as depicted in Figure 4A.

In this case, the positioner means 45 starts rotation of the rollers 45a at a speed according to a welding speed, i.e., a deposition rate of the molten weld metal 31a and rotates the steel pipes 11 in the R direction indicated in Figure 8 to proceed circumferential welding while controlling the rotation speed. In this case, in the welding direction, the weld line lies substantially in the vertical plane, and the EGW welding electrodes 5 are substantially in the same position as when moving upward in the vertical direction. Thereby, sequentially, the molten pool composed of the molten weld metal 31a is formed in the groove 12, and as the molten pool (molten weld metal 31a) is solidified, and the weld metal 31 is formed to obtain a circumferentially welded portion 30.

In the single pass circumferential welding as described above, the moving speed of the welding electrodes 5 is controlled so that the welding electrodes 5 move in synchronization with the molten metal surface level of the molten weld metal 31a generated in the groove 2. For example, a rising rate of the molten metal surface level of the molten weld metal 31a generated in the groove 12 is detected by temporal changes in a welding current value of each EGW welding electrode 5 disposed in the groove 12 of the steel pipes 11. Then, based on results of the detection, the rotation speed of the rollers 45a of the positioner means 45 is controlled, whereby welding can be performed while maintaining an extension length of the welding wire extended in the groove 12 from the tip 51 of the EGW welding electrode 5 in a predetermined range, thereby allowing the simultaneous single pass welding to be performed much more stably. In order to achieve the method, for example, any one of the EGW welding electrodes 5 may be provided with a current detection means, which is not depicted in the drawings, for detecting changes in welding current. When such a current detection means is provided, although the surface (the molten metal surface level) of the molten weld metal 31a rises to reduce the extension length of the wire extended from the tip 51 and thereby the welding current value increases, the current detection means is caused to monitor temporal changes in the welding current value and calculate an increase rate of the welding current value, thereby allowing detection of the rising rate of the molten metal surface level. Then, based on results of the calculation by the current detection means, the rotation speed of the rollers 45a of the positioner means 45 is controlled so as to synchronize with the rising rate of the molten metal surface level. With the structure thus formed, the distance (arc length) between the surface of the molten weld metal 31a and the tip 51 of each EGW welding electrode 5 can be set in a predetermined range, for example, a range of from 15 to 60 mm, and more preferably from 15 to 30 mm. Thereby, simultaneous single pass welding can be performed much more stably, leading to prevention of weld defects. The molten metal surface level may also be detected using the radiation thermometer mentioned above, a CCD camera, ultrasonic wave, or the like.

There may be adopted a structure in which a means for detecting a signal of the above-mentioned welding current value, intensity of infrared light, an image, ultrasonic reflection time, or the like and/or a control means for regulating the moving speed of the automatic carriages 42 on the basis of the detection signals detected thereby are provided in the carriage drive control devices 43 depicted in Figure 2A.

Then, when the EGW welding electrodes 5 reach the welding end position B as the welding proceeds, the rollers 45a of the positioner means 45 are stopped.

Throughout the process as described above, the circumferentially welded portion 30 is formed in the position of the ends 11a, 11a butted to each other, whereby the steel pipes 11 are welded to each other.

In the present embodiment, the EGW welding electrodes 5 are disposed on both of the front face 11A side and the back face 11B side of the steel pipes 11, i.e., on both of the front face (outer face) 11A side and the back face (inner face) 11B side thereof to simultaneously perform single pass circumferential welding. Thereby, even when performing EGW welding of the steel pipes 11 having a large plate thickness, single pass circumferential welding can be performed without reducing welding process efficiency, and while suppressing welding defects.

Even in the present embodiment, as with the first embodiment, the total number of the EGW welding electrodes 5 on both face sides can be two or more, and the number of the electrodes can be increased according to the plate thickness of the steel pipes 11 to be welded. This allows EGW welding of the pipe ends 11b, 11b of the steel pipes 1 made of thick plates having a plate thickness of from 40 to 300 mm, while highly efficiently suppressing the occurrence of defects.

In addition, as with the first embodiment, more preferably, circumferential welding is performed while oscillating the EGW welding electrodes 5 in the plate thickness direction of the steel pipes 11 (or pipe-shaped members), since a more remarkable effect of suppressing weld defects can be obtained.

Additionally, the present embodiment may further adopt a method for bonding a joint member, which is not depicted in the drawings, by welding onto a circumferential part of the steel pipes 11 bonded at the circumferentially welded portion 30. In this case, a steel material used for the joint member is not particularly limited, and for example, a material conventionally used in the field concerned, such as a diaphragm plate, is applicable. In addition, at the ends, there can be adopted a joint member with a double-sided groove on the front face 11A side and the back face 11B side. Additionally, the EGW welding as described above can be adopted as a welding method even in this case.

In addition, the front and back simultaneous single pass circumferential welding method using the EGW welding, as described in the present embodiment, can also be applied to welding work for a joint member such as a conventionally known non-penetrative type diaphragm for steel pipes (usually, a substantially disc-shaped steel plate) and a steel pipe.

According to the multi-electrode electrogas arc welding method for the thick steel plates 11 of the present embodiment as described above, welding efficiency improvement by single pass welding and the effect of suppressing weld defects can simultaneously be obtained by adopting the process adapted to allow the molten weld metal 31a to be guided to pass between both faces of the steel pipes 11 to perform EGW welding simultaneously from both face sides, even when performing butt welding of steel pipe-shaped members made of thick steel plates having a plate thickness of about 40 to 300 mm in the vertical position, as with the first embodiment. Examples

The present invention will be more specifically described below by using Examples of the multi-electrode electrogas arc welding method for thick steel plates and the multi-electrode electrogas arc circumferential welding method for steel pipes according to the present invention. However, obviously, the invention is not limited to the Examples below and can be implemented by appropriately adding modifications without departing from the scope of the invention as described above and below, all of which embodiments are included in the technical scope of the invention.

In the present Examples, first, there were prepared steel plates each made of a steel type depicted in Table 2 described above and having a plate thickness and external dimensions as depicted in Table 3 below. In addition, similarly, using steel plates each made of a steel type depicted in Table 2 above and having a plate thickness and external dimensions as depicted in Table 3 below, there were produced steel pipes each having an external diameter as depicted in Table 3 below by a bending processing method.

Table 3

| Steel type symbol | Thickness t (mm) | Test specimen size (mm) | | | |
|---|---|---|---|---|---|
| | | Butt joint for steel plates | Circumferential weld joint for steel pipes | | |
| | | External dimensions | Inner diameter d | Outer diameter D | External dimensions |
| N | 40 | Plate thickness t × plate width (only one side): 250 × length of welding length direction: 1000 | 1960 | 2040 | Plate thickness t × width per steel pipe member: 250 |
| D | 51 | | 1949 | 2051 | |
| E | 71 | | 4929 | 5071 | |
| A | 80 | | 4920 | 5080 | |
| B1, B2 | 102 | | 4898 | 5102 | |
| C | 150 | | 6350 | 6650 | |
| F | 210 | | No use | | |
| G | 300 | | | | |

Next, ends of the prepared respective steel plates and steel pipes were processed into respective groove shapes, as depicted in Table 4 below and Figures 9A to 9E.

Next, the ends of the respective steel plates were butted to each other, as well as the ends of the respective steel pipes were butted to each other. Then, single pass welding by multi-electrode EGW welding was performed under conditions for Example of the present invention and Comparative Examples, as depicted in Tables 4 and 5 below. In this case, in Examples 1 to 30 of the invention and Comparative Examples 1 to 8, butt welding by EGW welding was performed in a vertical upward welding position. In addition, in Examples 31 to 39 and Comparative Examples 9 to 12, circumferential welding by EGW welding was performed from downward to upward in a vertical direction by rotating the steel pipes along the pipe ends so that the weld line was substantially in a vertical plane in a state where the pipe ends of the steel pipes were butted to each other. Furthermore, in the respective Examples of the invention and the respective Comparative Examples, the EGW welding were performed with electrode arrangements as depicted in Table 4 below and Figures 9A to 9E.

Table 4

| | | Ex. No. | Steel plate | | Groove shape | | | | | Device configuration of VEGA process | | |
|---|---|---|---|---|---|---|---|---|---|---|---|---|
| | | | Steel type | Plate thickness t (mm) | Groove shape X: X-shaped V: V-shaped | Groove depth (excluding RF, mm) | Groove angle $\theta$ (°) | Root opening RO (mm) | Root face RF (mm) | Number of electrodes outside | Number of electrodes inside | Electrode arrangement symbol *see Fig. 8 |
| Examples of the present invention | Vertical butt welding | 1 | N | 40 | X | 20 | 30 | 3 | 0 | 1 | 1 | (a) |
| | | 2 | D | 51 | X | 18 | 20 | 4 | 15 | 1 | 1 | (a) |
| | | 3 | D | 51 | X | 14.5 | 20 | 4 | 22 | 1 | 1 | (a) |
| | | 4 | D | 51 | X | 14.5 | 20 | 4 | 22 | 1 | 1 | (a) |
| | | 5 | E | 71 | X | 28 | 15 | 4 | 15 | 1 | 1 | (a) |
| | | 6 | E | 71 | X | 20 | 20 | 5 | 31 | 1 | 1 | (a) |
| | | 7 | A | 80 | X | 35 | 35 | 1 | 10 | 1 | 1 | (a) |
| | | 8 | A | 80 | X | 34 | 35 | 2 | 12 | 1 | 1 | (a) |
| | | 9 | A | 80 | X | 38 | 35 | 0 | 4 | 1 | 1 | (a) |
| | | 10 | A | 80 | X | 34 | 25 | 2 | 12 | 1 | 1 | (a) |
| | | 11 | A | 80 | X | 25 | 20 | 5 | 30 | 1 | 1 | (a) |
| | | 12 | A | 80 | X | 15 | 15 | 10 | 50 | 1 | 1 | (a) |
| | | 13 | A | 80 | Inner/outer face asymmetrical X | Outside 50 Inside 30 | 20 30 | 6 | 0 | 2 – | – 1 | (c) |
| | | 14 | B1 | 102 | X | 45 | 10 | 8 | 12 | 2 | 2 | (b) |
| | | 15 | B1 | 102 | X | 39 | 10 | 8 | 24 | 2 | 2 | (b) |
| | | 16 | B1 | 102 | X | 39 | 10 | 8 | 24 | 2 | 2 | (b) |
| | | 17 | B1 | 102 | X | 39 | 10 | 8 | 24 | 2 | 2 | (b) |
| | | 18 | B1 | 102 | X | 30 | 10 | 8 | 42 | 1 | 1 | (a) |
| | | 19 | B1 | 102 | X | 30 | 10 | 8 | 42 | 1 | 1 | (a) |
| | | 20 | B1 | 102 | X | 30 | 10 | 8 | 42 | 1 | 1 | (a) |
| | | 21 | B2 | 102 | X | 48.5 | 15 | 4 | 5 | 2 | 2 | (b) |
| | | 22 | B2 | 102 | X | 46 | 15 | 4 | 10 | 2 | 2 | (b) |
| | | 23 | B2 | 102 | X | 51 | 30 | 0 | 0 | 2 | 2 | (b) |
| | | 24 | B2 | 102 | X | 49 | 30 | 0 | 4 | 2 | 2 | (b) |
| | | 25 | B2 | 102 | Inner/outer face asymmetrical X | Outside 60 Inside 30 | 20 35 | 4 | 12 | 2 – | – 1 | (c) |
| | | 26 | C | 150 | X | 49 | 10 | 14 | 52 | 2 | 2 | (b) |
| | | 27 | C | 150 | X | 49 | 10 | 16 | 52 | 2 | 2 | (b) |
| | | 28 | C | 150 | Inner/outer face asymmetrical X | Outside 70 Inside 35 | 15 20 | 8 | 45 | 2 – | – 1 | (c) |

| No. | Steel | | Groove | | | | | | | Note | Welding |
|---|---|---|---|---|---|---|---|---|---|---|---|
| 29 | F | 210 | X | 82.5 | 10 | 8 | 45 | 2 | 2 | (b) | Circumferential welding |
| 30 | G | 300 | X | 125 | 15 | 12 | 50 | 4 | 3 | (d) | Circumferential welding |
| 31 | N | 40 | X | 20 | 30 | 3 | 0 | 1 | 1 | (a) | Circumferential welding |
| 32 | D | 51 | X | 14.5 | 20 | 4 | 22 | 1 | 1 | (a) | Circumferential welding |
| 33 | E | 71 | X | 20 | 20 | 5 | 31 | 1 | 1 | (a) | Circumferential welding |
| 34 | A | 80 | X | 25 | 20 | 5 | 30 | 1 | 1 | (a) | Circumferential welding |
| 35 | A | 80 | Inner/outer face asymmetrical | Outside 50 / Inside 30 | 20 | 6 | 0 | 2 / – | – / 1 | (c) | Circumferential welding |
| 36 | B1 | 102 | X | 39 | 10 | 8 | 24 | 2 | 2 | (b) | Circumferential welding |
| 37 | B2 | 102 | X | 46 | 15 | 4 | 10 | 2 | 2 | (b) | Circumferential welding |
| 38 | B2 | 102 | Inner/outer face asymmetrical X | Outside 60 / Inside 30 | 20 | 4 | 12 | 2 / – | – / 1 | (c) | Circumferential welding |
| 39 | C | 150 | Inner/outer face asymmetrical X | Outside 70 / Inside 35 | 15 | 8 | 45 | 2 / – | – / 1 | (c) | Circumferential welding |
| 1 | E | 71 | V | 71 | 20 | 6 | – | 1 | 1 | (e) | Vertical butt welding |
| 2 | A | 80 | V | 80 | 20 | 4 | – | 1 | 1 | (e) | Vertical butt welding |
| 3 | A | 80 | V | 80 | 20 | 6 | – | 1 | 1 | (e) | Vertical butt welding |
| 4 | A | 80 | X | 37.5 | 35 | 0 | 5 | 1 | 1 | (a) | Vertical butt welding |
| 5 | A | 80 | V | 80 | 15 | 6 | – | 1 | 1 | (a) | Vertical butt welding |
| 6 | A | 80 | V | 80 | 15 | 8 | – | 1 | 1 | (e) | Vertical butt welding |
| 7 | B1 | 102 | V | 102 | 15 | 6 | – | 1 | 1 | (e) | Vertical butt welding |
| 8 | B2 | 102 | X | 48.5 | 30 | 0 | 5 | 2 | 2 | (b) | Vertical butt welding |
| 9 | N | 40 | V | 40 | 20 | 10 | – | 1 | 1 | (e) | Circumferential welding |
| 10 | D | 51 | V | 51 | 20 | 6 | – | 1 | 1 | (e) | Circumferential welding |
| 11 | D | 51 | V | 51 | 20 | 8 | – | 1 | 1 | (e) | Circumferential welding |
| 12 | A | 80 | V | 80 | 20 | 6 | – | 1 | 1 | (e) | Circumferential welding |

Rows 1–12: Comparative Examples

23

Table 5

| Ex. No. | Welding current I (A) Electrode No. 1 | 2 | 3 | 4 | Arc voltage E (V) Electrode No. 1 | 2 | 3 | 4 | Welding speed v (cm/sec) | heat input Q (kJ/cm) | Torch approach angle P (°) | Oscil-lation width (mm) | Number of times of oscillation (min-1) | Electrode stop time (s) Opening side | Root side | UT (ultrasonic flaw detection) method O: no defect x: defective | Steel member HAZ toughness Charpy absorbed energy at HAZ 1 mm position -20°C test vE-20 (J) | 0°C test vE0 (J) | Weld metal toughness Charpy absorbed energy at weld metal center positon -20°C test vE-20 (J) | 0°C test vE0 (J) |
|---|---|---|---|---|---|---|---|---|---|---|---|---|---|---|---|---|---|---|---|---|
| 1 | 400 | 400 | – | – | 40 | 40 | – | – | 16.3 | 118 | 15 | 7 | 50 | 0 | 0.7 | O | 182 | 226 | 78 | 135 |
| 2 | 400 | 400 | – | – | 40 | 40 | – | – | 17.2 | 112 | 20 | 7 | 25 | 1.0 | 0.7 | O | 250 | | 88 | |
| 3 | 420 | 420 | – | – | 41 | 41 | – | – | 18.8 | 110 | 20 | 6 | 28 | 1.0 | 1.0 | O | 218 | | 109 | |
| 4 | 420 | 420 | – | – | 41 | 41 | – | – | 17.6 | 118 | 20 | 0 | 0 | – | – | O | 192 | | 85 | |
| 5 | 420 | 420 | – | – | 42 | 42 | – | – | 12.4 | 171 | 20 | 9 | 18 | 1.1 | 1.1 | O | 187 | | 63 | |
| 6 | 420 | 420 | – | – | 42 | 42 | – | – | 11.7 | 181 | 20 | 7 | 24 | 1.1 | 1.1 | O | 201 | | 88 | |
| 7 | 420 | 420 | – | – | 42 | 42 | – | – | 6.3 | 336 | 20 | 10 | 20 | 1.1 | 1.1 | O | 168 | | 58 | |
| 8 | 420 | 420 | – | – | 42 | 42 | – | – | 6.6 | 321 | 20 | 10 | 20 | 1.1 | 1.1 | O | 156 | | 78 | |
| 9 | 420 | 420 | – | – | 42 | 42 | – | – | 7.1 | 297 | 20 | 10 | 20 | 1.1 | 1.1 | O | 168 | | 84 | |
| 10 | 420 | 420 | – | – | 42 | 42 | – | – | 9.1 | 234 | 20 | 0 | 0 | – | – | O | 147 | | 67 | |
| 11 | 420 | 420 | – | – | 42 | 42 | – | – | 9.5 | 223 | 20 | 9 | 20 | 1.0 | 0.7 | O | 202 | | 73 | |
| 12 | 420 | 420 | – | – | 41 | 41 | – | – | 7.4 | 279 | 20 | 6 | 28 | 1.0 | 1.0 | O | 185 | | 63 | |
| 13 | 390 | 370 | – 420 | – | 42 | 42 | – 42 | – | 9.0 | 300 | 20 | 10 9 | 30 20 | 1.0 1.0 | 0 0.7 | O | 212 255 | | 79 89 | |
| 14 | 390 | 370 | 390 | 370 | 42 | 42 | 42 | 42 | 9.4 | 407 | 25 | 15 | 23 | 1.0 | 1.0 | O | 184 | | 66 | |
| 15 | 390 | 370 | 390 | 370 | 42 | 42 | 42 | 42 | 10.8 | 355 | 25 | 10 | 20 | 1.1 | 1.1 | O | 211 | | 78 | |
| 16 | 390 | 370 | 390 | 370 | 42 | 42 | 42 | 42 | 9.9 | 387 | 25 | 0 | 0 | – | – | O | 180 | | 88 | |
| 17 | 390 | 370 | 390 | 370 | 42 | 42 | 42 | 42 | 9.5 | 403 | | Only two electrodes on opening side were oscillated. 10 | 20 | 1.1 | 1.1 | O | 166 | | 79 | |
| 18 | 390 | 370 | – | – | 42 | 42 | – | – | 5.1 | 376 | 25 | 10 | 20 | 1.1 | 1.1 | O | 215 | | 76 | |
| 19 | 390 | 370 | – | – | 42 | 42 | – | – | 5.1 | 376 | 0 | 10 | 20 | 1.1 | 1.1 | O | 162 | | 84 | |
| 20 | 390 | 370 | – | – | 42 | 42 | – | – | 5.1 | 376 | 40 | 10 | 20 | 1.1 | 1.1 | O | 195 | | 89 | |
| 21 | 360 | 330 | 360 | 330 | 42 | 42 | 42 | 42 | 9.8 | 355 | 25 | 15 | 23 | 1.0 | 1.0 | O | 187 | | 66 | |
| 22 | 360 | 330 | 360 | 330 | 42 | 42 | 42 | 42 | 10.5 | 331 | 25 | 15 | 23 | 1.0 | 1.0 | O | 164 | | 58 | |
| 23 | 360 | 330 | 360 | 330 | 42 | 42 | 42 | 42 | 8.0 | 436 | 25 | 15 | 23 | 1.0 | 1.0 | O | 145 | | 53 | |
| 24 | 360 | 330 | 360 | 330 | 42 | 42 | 42 | 42 | 8.6 | 405 | 25 | 15 | 23 | 1.0 | 1.0 | O | 148 | | 63 | |
| 25 | 390 | 370 | – 420 | – | 42 | 42 | – 42 | – | 8.1 | 367 | 25 | 15 9 | 17 20 | 1.1 1.0 | 1.1 0.7 | O | 204 241 | | 72 81 | |
| 26 | 360 | 330 | 360 | 330 | 42 | 42 | 42 | 42 | 4.4 | 790 | 25 | 10 | 20 | 1.1 | 1.1 | O | 245 | | 76 | |
| 27 | 360 | 330 | 360 | 330 | 42 | 42 | 42 | 42 | 3.9 | 892 | 25 | 10 | 20 | 1.1 | 1.1 | O | 238 | | 86 | |

Examples of the present invention — Vertical butt welding

| No. | Electrode No. 1 | 2 | 3 | 4 | Electrode No. 1 | 2 | 3 | 4 | | | | | | | | | | | | |
|---|---|---|---|---|---|---|---|---|---|---|---|---|---|---|---|---|---|---|---|---|
| 28 | 390 | 370 | - | - | 42 | 42 | - | - | 5.1 | 584 | 25 | 25 / 10 | 12.76596 / 20 | 1.1 / 1.1 | 1.1 / 1.1 | O | 159 / 210 | | 56 / 68 | |
| 29 | - | - | 420 | - | - | - | 42 | - | 3.5 | 994 | 25 | 25 | 20 | 1.1 | 1.1 | O | 195 | | 77 | |
| 30 | 360 | 330 | 360 | 330 | 42 | 42 | 42 | - | 2.3 | 2662 | 25 | 25 | 12.76596 | 1.1 | 1.1 | O | 189 | 212 | 68 | 105 |
| 31 | 400 | 400 | - | - | 40 | 40 | - | - | 16.0 | 120 | 15 | 7 | 50 | 0 | 0.7 | O | 187 | 235 | 84 | 125 |
| 32 | 420 | 420 | - | - | 41 | 41 | - | - | 19 | 109 | 20 | 6 | 28 | 1.0 | 1.0 | O | 221 | | 95 | |
| 33 | 420 | 420 | - | - | 42 | 42 | - | - | 11.5 | 184 | 20 | 7 | 24 | 1.1 | 1.1 | O | 197 | | 74 | |
| 34 | 420 | 420 | - | - | 42 | 42 | - | - | 9.8 | 216 | 20 | 9 | 20 | 1.0 | 0.7 | O | 168 | | 55 | |
| 35 | 390 | 370 | - | - | 42 | 42 | - | - | 8.8 | 300 | 20 | 10 / 9 | 30 / 20 | 1.0 / 1.0 | 0 / 0.7 | O | 212 / 242 | | 89 / 74 | |
| 36 | 390 | 370 | 390 | 370 | 42 | 42 | 42 | 42 | 10.9 | 351 | 20 | 10 | 20 | 1.1 | 1.1 | O | 211 | | 74 | |
| 37 | 360 | 330 | 360 | 330 | 42 | 42 | 42 | 42 | 10.7 | 325 | 20 | 15 | 23 | 1.0 | 1.0 | O | 177 | | 58 | |
| 38 | 390 | 370 | - | - | 42 | 42 | - | - | 8 | 367 | 20 | 15 / 9 | 17 / 20 | 1.1 / 1.0 | 1.1 / 0.7 | O | 187 / 224 | | 73 / 78 | |
| 39 | - | - | 420 | - | - | - | 42 | - | 4.9 | 584 | 20 | 25 / 10 | 12.76596 / 20 | 1.1 / 1.1 | 1.1 / 1.1 | O | 199 / 230 | | 66 / 74 | |

Circumferential welding

Table 6

| | | Ex. No. | Welding conditions for VEGA welding method | | | | | | | | | | | Oscillation conditions | | | | Weld defect evaluation | Steel member HAZ toughness | | Weld metal toughness | |
|---|---|---|---|---|---|---|---|---|---|---|---|---|---|---|---|---|---|---|---|---|---|---|---|
| | | | Welding current I (A) | | | | Arc voltage E (V) | | | | Welding speed v (cm/sec) | heat input Q (kJ/cm) | Torch approach angle P (°) | Oscil-lation width (mm) | Number of times of oscillation (min-1) | Electrode stop time (s) | | UT (ultrasonic flaw detection) method | Charpy absorbed energy at HAZ 1 mm position | | Charpy absorbed energy at weld metal center positon | |
| | | | Electrode No. | | | | Electrode No. | | | | | | | | | Opening side | Root side | O: no defect | -20°C test | 0°C test | -20°C test | 0°C test |
| | | | 1 | 2 | 3 | 4 | 1 | 2 | 3 | 4 | | | | | | | | ×: defective | vE-20(J) | vE0(J) | vE-20(J) | vE0(J) |
| Comparative Examples | Vertical butt welding | 1 | 420 | 420 | – | – | 42 | 42 | – | – | 4.8 | 436 | 20 | 9 | 18 | 1.1 | 1.1 | O | 33 | | 41 | |
| | | 2 | 420 | 420 | – | – | 42 | 42 | – | – | 3.9 | 532 | 20 | 10 | 20 | 1.1 | 1.1 | O | 31 | | 39 | |
| | | 3 | 420 | 420 | – | – | 42 | 42 | – | – | 4.0 | 525 | 20 | 10 | 20 | 1.1 | 1.1 | O | 39 | | 34 | |
| | | 4 | 420 | 420 | – | – | 42 | 42 | – | – | 6.7 | 313 | 20 | 10 | 20 | 1.1 | 1.1 | × | 161 | | 88 | |
| | | 5 | 420 | 420 | – | – | 42 | 42 | – | – | 4.2 | 509 | 20 | 9 | 20 | 1.0 | 0.7 | O | 29 | | 41 | |
| | | 6 | 420 | 420 | – | – | 41 | 41 | – | – | 4.0 | 518 | 20 | 6 | 28 | 1.0 | 1.0 | O | 21 | | 29 | |
| | | 7 | 390 | 370 | – | – | 42 | 42 | – | – | 2.8 | 695 | 20 | 10 | 20 | 1.1 | 1.1 | O | 35 | | 33 | |
| | | 8 | 360 | 330 | 360 | 330 | 42 | 42 | 42 | 42 | 8.8 | 395 | 20 | 15 | 23 | 1.0 | 1.0 | × | 167 | | 67 | |
| | Circumferential welding | 9 | 400 | 400 | – | – | 40 | 40 | – | – | 6.5 | 295 | 20 | 7 | 50 | 0 | 0.7 | O | 34 | 62 | 39 | 58 |
| | | 10 | 400 | 400 | – | – | 40 | 40 | – | – | 5.9 | 323 | 20 | 7 | 25 | 1.0 | 0.7 | O | 45 | | 37 | |
| | | 11 | 420 | 420 | – | – | 41 | 41 | – | – | 6.6 | 311 | 20 | 7 | 24 | 1.1 | 1.1 | O | 41 | | 39 | |
| | | 12 | 420 | 420 | – | – | 42 | 42 | – | – | 3.7 | 565 | 20 | 9 | 20 | 1.0 | 0.7 | O | 33 | | 34 | |

Regarding steel plate joints and steel pipe joints bonded by using the multi-electrode electrogas arc welding under the various conditions, weld defects in weld zones and toughness of weld heat-affected zones (HAZ) and of weld metal were evaluated by methods as described below.

Regarding weld defects, for a main purpose of detecting incomplete penetration at a root position of the weld zone where penetration may not be obtainable, inspection was performed by ultrasonic flaw detection testing for weld joints, using, as applicable standards, ultrasonic flaw detection testing method for steel weld zones in JIS Z 3060 (2002). In this case, an angle beam single probe technique was used as a flaw detection method, and, at a flaw detection refractive angle of 60.0°, flaw detection was performed by a direct projection method from both face sides of the joints. In addition, based on Appendix 7 L detection level of the above standards as determination criteria, flaw detection results were evaluated.

The evaluation results were listed in Tables 5 and 6, where "○" represents an absence of any weld defect and "×" represents a presence of a weld defect in the detection by the ultrasonic flaw detection method under the above conditions.

On the other hand, for a purpose of evaluating soundness of base material heat-affected zones and weld metal material properties themselves, particularly, in order to evaluate toughness that is a problem in high heat input welding, Charpy impact test was performed in accordance with JIS Z 2242 (1998) by collecting Charpy specimens from weld joints in a plate width direction as a longitudinal direction. In this case, HAZ toughness was evaluated by forming a V-shaped cutout (notch) at a position on a HAZ side 1 mm away from a fusion line and regarding total absorbed energy in the impact test as Charpy absorbed energy "-20°C: vE-20(J); 0°C: vE0(J)". Results of the evaluation were listed in Tables 5 and 6.

In addition, weld metal toughness was evaluated by forming a V-shaped cutout (notch) at a center position of each weld metal and regarding total absorbed energy in the impact test as Charpy absorbed energy "-20°C: vE-20(J); 0°C: vE0(J)", and results of the evaluation were listed in Tables 5 and 6.

In general, in order to use a weld joint in a structure, firstly, it is an essential requirement that no weld defect is detected in the evaluation of flaw detection results, and secondly, it is desirable that a weld zone secures a favorable Charpy toughness value. In the present Examples, the evaluation was performed substantially by regarding a range of absorbed energy values exceeding 47 J as favorable Charpy toughness values in the Charpy impact test at -20°C.

As depicted in Table 5, in Examples 1 to 39 of the present invention subjected to single pass EGW welding under the conditions specified by the present invention, no weld defect was detected in all cases subjected to EGW welding between steel plates and EGW welding between steel pipes, and toughness of the HAZ and weld metal center positions can be seen to be excellent. Accordingly, it is apparent that the use of the welding method of the present invention can achieve excellent welding quality and high productivity by single pass.

In contrast, as depicted in Table 6, in Comparative Examples 1 to 12 subjected to single pass EGW welding under conditions outside the range specified by the present invention, all cases subjected to EGW welding between steel plates or between steel pipes failed to achieve together both the absence of weld defects detected and the securing of weld metal toughness. This indicated that the products of the Comparative Examples were inadequate as weld joints for actual structures.

Comparative Examples 4 and 8 used X-shaped grooves and applied suitable heat input relative to plate thickness, whereby favorable toughness values were obtained. However, in both Examples, penetration was insufficient with respect to the distance of root face RF, resulting in failure on evaluation results of weld defects.

In addition, Comparative Examples 1 to 3, 5 to 7, and 9 to 12 obtained successful results in the weld defect evaluation. However, those Examples used groove shapes in which only one face side was beveled, and both of the steel member HAZ toughness and the weld metal did not exhibit any sufficient toughness value. As a result, the above Comparative Examples were determined to be inappropriate as weld joints for actual structures.

The results of the Examples as described above show that the multi-electrode electrogas arc welding method for steel plates and the multi-electrode electrogas arc circumferential welding method for steel pipes according to the present invention can achieve both welding efficiency improvement and weld defect reduction, while suppressing reduction in quality of a weld zone.

Industrial Applicability

According to the present invention, high productivity and high welding quality can be simultaneously achieved by applying the present invention to a welding process, for example, when manufacturing a large steel structure composed of steel plates and steel pipes, such as a steel pipe-shaped columnar member manufactured from thick steel plates and used in the architectural field, a large steel tower, or a steel tower portion of a large windmill for power generation. Thus, the degree of social contribution made by the present invention is immeasurable.

Reference Signs List

1, 10: Thick steel plate
1A, 10A: Front face
1B, 10B: Back face
1a: End
2, 2a, 2b: Groove
21: Guide passage
11: Steel pipe (a steel pipe obtained by processing a thick steel plate into a pipe shape)
11A: Front face
11B: Back face
11a: End
11b: Pipe end
12: Groove
3: Weld zone
30: Circumferentially welded portion 31: Weld metal
31a: Molten weld metal (molten pool)
4: Electrogas arc welding device (EGW welding device)
41: Base
42: Automatic carriage
43: Carriage drive control device
40: Electrogas arc circumferential welding device (EGW circumferential welding device)
45: Positioner means
45a: Roller
5: Electrogas arc welding electrode (EGW welding electrode)
51: Tip
A, A1: Welding start position
B, B1: Welding end position

**Claims**

1.  A multi-electrode electrogas arc welding method, comprising:

    disposing ends of thick steel plates (1) to be welded, having a plate thickness of 80 to 300 mm so as to face each other to form a groove (2) between the ends of the steel plates,
    a root opening RO of the groove being in a range of from 0 to 16 mm, and where, when the root opening RO is in a range of $0 \leq RO < 1$ mm, a root face RF satisfies a relationship represented by a formula 1 below; when the root opening RO is in a range of 1 mm $\leq RO < 10$ mm, the root face RF satisfies a relationship represented by a formula 2 below; and when the root opening RO is in a range of 10 mm $\leq RO \leq 16$ mm, the root face RF satisfies a relationship represented by a formula 3 below:

$$RF \leq 7.8RO + 4.0 \text{ mm} \ldots \text{formula 1}$$

$$RF \leq 4.8RO + 7.0 \text{ mm} \ldots \text{formula 2}$$

$$RF \leq 55 \text{ mm} \qquad \ldots \text{formula 3}$$

    in the above formulae 1, 2, and 3, RF represents root face and RO represents root opening;
    disposing one or two or more electrogas arc welding electrodes (5) in the groove on each of front and back face sides of the steel plates; and
    simultaneously welding from downward to upward in a vertical direction,

wherein a moving speed of each of the electrogas arc welding electrodes is controlled so that the each electrogas arc welding electrode moves in synchronization with a molten metal surface level of a molten weld metal deposited in the groove.

2. The multi-electrode electrogas arc welding method according to Claim 1, wherein the root opening RO is not less than 3 mm and not more than 8 mm, and the root face RF is not more than 8 mm.

3. The multi-electrode electrogas arc welding method according to Claim 1 or 2, wherein an approach angle of the electrogas arc welding electrodes is set to be not less than 0° and not more than 40° when the approach angle thereof in a vertical downward direction is 0°.

4. The multi-electrode electrogas arc welding method to any one of Claims 1 to 3, wherein welding is performed while oscillating at least one of the electrogas arc welding electrodes in a plate thickness direction of the thick steel plates.

5. The multi-electrode electrogas arc welding method to any one of Claims 1 to 4, wherein the thick steel plate is subjected to bending into steel pipe, and then, ends of the thick steel plate disposed so as to face each other by the bending processing are welded.

6. A multi-electrode electrogas arc circumferential welding method according to any one of Claims 1 to 4, the method comprising:

   disposing ends of a plurality of steel (11) pipes so as to face each other to form the groove between the ends of the steel pipes; mounting the steel pipes on a positioner means (45) so that center axes of the steel pipes are substantially concentric and substantially horizontal; and
   next, causing the positioner means to rotate the steel pipes around the center axes to perform the welding.

7. The multi-electrode electrogas arc circumferential welding method according to Claim 6, further comprising disposing joint members so as to face each other on a circumferential part of the steel pipes to form the groove, thereby welding the joint members.

**Patentansprüche**

1. Mehrelektroden-Elektrogas-Lichtbogenschweißverfahren, das aufweist:

   Anordnen von Enden zu verschweißender Grobstahlbleche (1) mit einer Blechdicke von 80 bis 300 mm, so dass sie zueinander weisen, um eine Fuge (2) zwischen den Enden der Stahlbleche zu bilden,
   wobei ein Stegabstand RO der Fuge in einem Bereich von 0 bis 16 mm liegt und wobei bei einem Stegabstand RO in einem Bereich $0 \leq RO < 1$ mm eine Stegflanke RF eine durch eine nachstehende Formel 1 dargestellte Beziehung erfüllt; bei einem Stegabstand RO in einem Bereich von 1 mm $\leq RO < 10$ mm die Stegflanke RF eine durch eine nachstehende Formel 2 dargestellte Beziehung erfüllt; und bei einem Stegabstand RO in einem Bereich von 10 mm $\leq RO \leq 16$ mm die Stegflanke RF eine durch eine nachstehende Formel 3 dargestellte Beziehung erfüllt:

$$RF \leq 7{,}8RO + 4{,}0 \text{ mm} \qquad \text{Formel 1,}$$

$$RF \leq 4{,}8RO + 7{,}0 \text{ mm} \qquad \text{Formel 2,}$$

$$RF \leq 55 \text{ mm} \qquad \text{Formel 3,}$$

   wobei in den vorstehenden Formeln 1, 2 und 3 RF die Stegflanke darstellt und RO den Stegabstand darstellt;
   Anordnen einer oder zwei oder mehr Elektrogas-Lichtbogenschweißelektroden (5) in der Fuge jeweils auf einer Vorder- und einer Rückflächenseite des Stahlblechs; und
   gleichzeitiges Schweißen von unten nach oben in senkrechter Richtung,

wobei eine Bewegungsgeschwindigkeit jeder der Elektrogas-Lichtbogenschweißelektroden so gesteuert wird, dass sich jede Elektrogas-Lichtbogenschweißelektrode synchron mit einem Metallschmelzen-Oberflächenniveau eines in der Fuge aufgebrachten schmelzflüssigen Schweißmetalls bewegt.

2. Mehrelektroden-Elektrogas-Lichtbogenschweißverfahren nach Anspruch 1, wobei der Stegabstand RO mindestens 3 mm und höchstens 8 mm beträgt und die Stegflanke RF höchstens 8 mm beträgt.

3. Mehrelektroden-Elektrogas-Lichtbogenschweißverfahren nach Anspruch 1 oder 2, wobei ein Näherungswinkel der Elektrogas-Lichtbogenschweißelektroden auf mindestens 0° und höchstens 40° eingestellt ist, wenn ihr Näherungswinkel in senkrechter Abwärtsrichtung 0° beträgt.

4. Mehrelektroden-Elektrogas-Lichtbogenschweißverfahren nach einem der Ansprüche 1 bis 3, wobei das Schweißen durchgeführt wird, während mindestens eine der Elektrogas-Lichtbogenschweißelektroden in Blechdickenrichtung der Grobstahlbleche pendelt.

5. Mehrelektroden-Elektrogas-Lichtbogenschweißverfahren nach einem der Ansprüche 1 bis 4, wobei das Grobstahlblech zu einem Stahlrohr gebogen und dann Enden des Grobstahlblechs, die durch die Biegebearbeitung zueinander weisend angeordnet sind, verschweißt werden.

6. Mehrelektroden-Elektrogas-Lichtbogenrundschweißverfahren nach einem der Ansprüche 1 bis 4, wobei das Verfahren aufweist:

Anordnen von Enden mehrerer Stahlrohre (11), so dass sie zueinander weisen, um die Fuge zwischen den Enden der Stahlrohre zu bilden; Montieren der Stahlrohre auf einer Positioniereinrichtung (45), so dass Mittelachsen der Stahlrohre im Wesentlichen konzentrisch und im Wesentlichen waagerecht sind; und anschließendes Veranlassen, dass die Positioniereinrichtung die Stahlrohre um die Mittelachsen dreht, um das Schweißen durchzuführen.

7. Mehrelektroden-Elektrogas-Lichtbogenrundschweißverfahren nach Anspruch 6, das ferner aufweist: Anordnen von Verbindungsbauteilen, so dass sie auf einem Umfangsteil der Stahlrohre zueinander weisen, um die Fuge zu bilden, wodurch die Verbindungsbauteile verschweißt werden.

**Revendications**

1. Procédé de soudage à l'arc électrogaz avec de multiples électrodes, comprenant les étapes suivantes :

disposer des extrémités d'épaisses plaques d'acier (1) à souder, présentant une épaisseur de plaque de 80 à 300 mm, de manière à ce qu'elles soient en regard les unes des autres pour former une rainure (2) entre les extrémités des plaques d'acier, un écartement des bords à la racine RO de la rainure se situant dans une plage de 0 à 16 mm, et où, lorsque l'écartement des bords à la racine RO se situe dans une plage de $0 \leq RO < 1$ mm, un méplat RF satisfait une relation représentée par une formule 1 ci-dessous ; lorsque l'écartement des bords à la racine RO se situe dans une plage de $1$ mm $\leq RO < 10$ mm, le méplat RF satisfait une relation représentée par une formule 2 ci-dessous ; et lorsque l'écartement des bords à la racine RO se situe dans une plage de $10$ mm $\leq RO \leq 16$ mm, le méplat RF satisfait une relation représentée par une formule 3 ci-dessous :

$$RF \leq 7,8 \ RO + 4,0 \ mm \ \ldots \ formule \ 1$$

$$RF \leq 4,8 \ RO + 7,0 \ mm \ \ldots \ formule \ 2$$

$$RF \leq 55 \ mm \ \ldots \ formule \ 3$$

dans les formules 1, 2 et 3 ci-dessus, RF représente un méplat et RO représente un écartement des bords à la racine ;

disposer une ou deux ou davantage d'électrodes de soudage à l'arc electrogaz (5) dans la rainure sur chacune des faces avant et arrière des plaques d'acier ; et

souder simultanément de bas en haut dans une direction verticale,

dans lequel une vitesse de déplacement de chacune des électrodes de soudage à l'arc electrogaz est réglée de manière que chaque électrode de soudage à l'arc electrogaz se déplace en synchronisation avec un niveau de surface de métal fondu d'un métal d'apport fondu déposé dans la rainure.

**2.** Procédé de soudage à l'arc electrogaz avec de multiples électrodes selon la revendication 1, dans lequel l'écartement des bords à la racine RO est au moins égal à 3 mm et au plus égal à 8 mm, et le méplat RF n'excède pas 8 mm.

**3.** Procédé de soudage à l'arc electrogaz avec de multiples électrodes selon la revendication 1 ou 2, dans lequel un angle d'attaque des électrodes de soudage à l'arc electrogaz est réglé pour être au moins égal à 0° et au plus égal à 40° lorsque leur angle d'attaque dans une direction verticale vers le bas est de 0°.

**4.** Procédé de soudage à l'arc electrogaz avec de multiples électrodes selon l'une quelconque des revendications 1 à 3, dans lequel le soudage est effectué tandis qu'au moins l'une des électrodes de soudage à l'arc electrogaz est mise en oscillation dans une direction d'épaisseur de plaque des épaisses plaques d'acier.

**5.** Procédé de soudage à l'arc electrogaz avec de multiples électrodes selon l'une quelconque des revendications 1 à 4, dans lequel l'épaisse plaque d'acier est soumise à un cintrage en tuyau d'acier, puis des extrémités de l'épaisse plaque d'acier disposées de manière à être en regard l'une de l'autre par le processus de cintrage sont soudées.

**6.** Procédé de soudage à l'arc electrogaz circulaire avec de multiples électrodes selon l'une quelconque des revendications 1 à 4, le procédé comprenant les étapes suivantes :

disposer des extrémités d'une pluralité de tuyaux en acier (11) de manière qu'elles soient en regard les unes des autres pour former la rainure entre les extrémités des tuyaux en acier ;

monter les tuyaux en acier sur un moyen de positionnement (45) de manière que des axes centraux des tuyaux en acier soient sensiblement concentriques et sensiblement horizontaux ; et

faire ensuite que le moyen de positionnement mette les tuyaux en acier en rotation autour des axes centraux pour réaliser le soudage.

**7.** Procédé de soudage à l'arc electrogaz circulaire avec de multiples électrodes selon la revendication 6, comprenant en outre la disposition d'éléments de raccord de manière à ce qu'ils soient en regard les uns des autres sur une partie de circonférence des tuyaux en acier pour former la rainure, ce qui permet de souder les éléments de raccord.

# FIG. 1

(a)

(b)

1A (FRONT FACE SIDE)

1B (BACK FACE SIDE)

# FIG. 2

(a)

(b)

# FIG. 3

(a)

(b)

# FIG. 4

(a)

(b)

# FIG. 5

## (a)

REGION 3
$RF \leqq$
55 (mm)

REGION 2
$RF \leqq$
$4.8 \times RO+7$ (mm)

REGION 1
$RF \leqq$
$7.8 \times RO+4$ (mm)

ROOT FACE RF (mm)

ROOT OPENING RO (mm)

## (b)

t=102mm
○ NO UNDEPOSITED PORTION FOUND
× UNDEPOSITED PORTION FOUND

ROOT FACE RF (mm)

ROOT OPENING RO (mm)

## (c)

t= 80mm
○ NO UNDEPOSITED PORTION FOUND
× UNDEPOSITED PORTION FOUND

ROOT FACE RF (mm)

ROOT OPENING RO (mm)

# FIG. 6

## (a)

## (b)

# FIG. 7

(a)

(b)

FIG. 8

# FIG. 9

(a)

RF

RO

(b)

(c)

(d)

(e)

**REFERENCES CITED IN THE DESCRIPTION**

**Patent documents cited in the description**

- JP 08187579 A
- JP H1133716 B
- JP 2005074442 A
- JP 2003245775 A
- JP H10118771 B
- JP 2012011400 A
- JP 2012011407 A
- JP 2007160349 A

**Non-patent literature cited in the description**

- *JIS Z 3001-1,* 2008
- *JIS Z 3060,* 2002
- *JIS Z 2242,* 1998